(19) Europäisches Patentamt / European Patent Office / Office européen des brevets

(11) **EP 1 804 967 B1**

(12) **FASCICULE DE BREVET EUROPEEN**

(45) Date de publication et mention
de la délivrance du brevet:
**29.06.2011 Bulletin 2011/26**

(21) Numéro de dépôt: **05807804.9**

(22) Date de dépôt: **20.09.2005**

(51) Int Cl.:
*B01J 21/12* $^{(2006.01)}$      *B01J 27/188* $^{(2006.01)}$
*B01J 23/888* $^{(2006.01)}$     *B01J 21/02* $^{(2006.01)}$
*C10G 47/20* $^{(2006.01)}$      *C10G 49/04* $^{(2006.01)}$

(86) Numéro de dépôt international:
**PCT/FR2005/002332**

(87) Numéro de publication internationale:
**WO 2006/032782 (30.03.2006 Gazette 2006/13)**

(54) **CATALYSEUR ALUMINO-SILICATE DOPE ET PROCEDE AMELIORE DE TRAITEMENT DE CHARGES HYDROCARBONEES**

DOTIERTE ALUMINIUM-SILICAT-KATALYSATOREN UND VERBESSERTES VERFAHREN ZUR BEHANDLUNG VON KOHLENWASSERSTOFFEINSÄTZEN

DOPED ALUMINO-SILICATE CATALYST AND IMPROVED METHOD FOR TREATING HYDROCARBON FEEDS

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **22.09.2004  FR 0409997**

(43) Date de publication de la demande:
**11.07.2007  Bulletin 2007/28**

(73) Titulaire: **Institut Français du Pétrole
92852 Rueil Malmaison Cedex (FR)**

(72) Inventeurs:
• **EUZEN, Patrick
  F-75001 Paris (FR)**
• **CHAUMONNOT, Alexandra
  F-69008 Lyon (FR)**
• **ROY-AUBERGER, Magalie
  F-38300 Nivolas-Vermelle (FR)**

• **BOURGES, Patrick
  F-69003 Lyon (FR)**
• **CSERI, Tivadar
  F-42400 Saint Chamond (FR)**
• **DELAGE, Maryline
  F-69700 Chassagny (FR)**
• **LETT, Nathalie
  F-69350 La Mulatière (FR)**

(56) Documents cités:
EP-A- 0 325 827          WO-A-02/055192
WO-A1-2007/003793        WO-A1-2007/003793
FR-A- 2 667 610          US-A- 3 666 685
US-A- 5 370 788

• DATABASE WPI Section Ch, Week 200046 Derwent Publications Ltd., London, GB; Class E19, AN 2000-507761 XP002364830 -& JP 2000 135437 A (SHOKUBAI KASEI KOGYO KK) 16 mai 2000 (2000-05-16)

**Description**

**Domaine de l'invention**

La présente invention concerne des catalyseurs dopés sur supports alumino-silicates et les procédés d'hydrocraquage, d'hydroconversion et d'hydrotraitement les mettant en oeuvre.

L'objectif du procédé est essentiellement la production de distillats moyens, c'est-à-dire de coupes à point d'ébullition initial d'au moins 150°C et final allant jusqu'à avant le point d'ébullition initial du résidu, par exemple inférieur à 340°C, ou encore à 370°C.

**Art Antérieur**

L'hydrocraquage de coupes pétrolières lourdes est un procédé très important du raffinage qui permet de produire, à partir de charges lourdes excédentaires et peu valorisables, des fractions plus légères telles que essences, carburéacteurs et gazoles légers que recherche le raffineur pour adapter sa production à la structure de la demande. Certains procédés d'hydrocraquage permettent d'obtenir également un résidu fortement purifié pouvant fournir d'excellentes bases pour huiles. Par rapport au craquage catalytique, l'intérêt de l'hydrocraquage catalytique est de fournir des distillats moyens, carburéacteurs et gazoles, de très bonne qualité. Inversement l'essence produite présente un indice d'octane beaucoup plus faible que celle issue du craquage catalytique.

L'hydrocraquage est un procédé qui tire sa flexibilité de trois éléments principaux qui sont, les conditions opératoires utilisées, les types de catalyseurs employés et le fait que l'hydrocraquage de charges hydrocarbonées peut être réalisé en une ou deux étapes.

Les catalyseurs d'hydrocraquage utilisés dans les procédés d'hydrocraquage sont tous du type bifonctionnel associant une fonction acide à une fonction hydrogénante. La fonction acide est apportée par des supports dont les surfaces varient généralement de 150 à 800 $m^2.g^{-1}$ et présentant une acidité superficielle, telles que les alumines halogénées (chlorées ou fluorées notamment), les combinaisons d'oxydes de bore et d'aluminium, les alumines-silice amorphes et les zéolithes. La fonction hydrogénante est apportée soit par un ou plusieurs métaux du groupe VIII de la classification périodique des éléments, soit par une association d'au moins un métal du groupe VIB de la classification périodique et au moins un métal du groupe VIII.

L'équilibre entre les deux fonctions acide et hydrogénante est un des paramètres qui régissent l'activité et la sélectivité du catalyseur. Une fonction acide faible et une fonction hydrogénante forte donnent des catalyseurs peu actifs, travaillant à température en général élevée (supérieure ou égale à 390-400 °C), et à vitesse spatiale d'alimentation faible (la VVH exprimée en volume de charge à traiter par unité de volume de catalyseur et par heure est généralement inférieure ou égale à 2), mais dotés d'une très bonne sélectivité en distillats moyens. Inversement, une fonction acide forte et une fonction hydrogénante faible donnent des catalyseurs actifs, mais présentant de moins bonnes sélectivités en distillats moyens (carburéacteurs et gazoles).

Un type de catalyseurs conventionnels d'hydrocraquage est à base de supports amorphes modérément acides, tels les alumines-silice par exemple. Ces systèmes sont utilisés pour produire des distillats moyens de bonne qualité, et éventuellement, des bases huiles. Ces catalyseurs sont par exemple utilisés dans les procédés en deux étapes.

La demande de brevet WO 02/055192 décrit un catalyseur utilisé dans les procédés d'hydrocraquage de charges hydrocarbonées comprenant au moins une silice alumine, ladite silice alumine possédant une teneur pondérale en silice comprise entre 10 et 60%, une teneur en Na inférieure à 300 ppm poids, un volume poreux total compris entre 0.5 et 1.2 ml/g mesuré par porosimétrie au mercure, la porosité de la silice alumine étant la suivante : le volume de ces mésopores dont le diamètre est compris entre 40 et 150 A et dont le diamètre moyen varie entre 80 et 120 A représente 30-80% du volume poreux total, le volume des macropores dont le diamètre est supérieur à 500Å représente 20-80% du volume poreux total, une surface spécifique BET supérieure à 200 m2/g, et au moins un élément hydrodésydrogénant choisi dans le groupe formé par les éléments du groupe VIB et du groupe VIII de la classification périodique. Ce catalyseur peut éventuellement contenir au moins un élément choisi dans le groupe formé par le phosphore, le bore et le silicium, du groupe VIIA et un élément des groupes VIIB et VB. L'utilisation de ce type de catalyseur pour réaliser l'hydrocraquage de charges hydrocarbonées permet d'obtenir des conversion élevées de la charge et des sélectivités en distillats moyens intéressantes.

Un autre document EP 0686687 décrit un catalyseur utilisé dans un procédé d'hydrocraquage doux de charge hydrocarbonées lourdes. Le catalyseur comprend 2 à 6% poids d'un oxyde du groupe VIII, 12 à 25% poids d'un oxyde de molybdène et 0 à 3% poids d'un oxyde de phosphore, ledit catalyseur étant supporté sur un support poreux d'alumine contenant 4 à 30% de silice. Le catalyseur a une surface spécifique BET comprise entre 150 et 250 m2/g, un volume poreux total compris entre 0.75 et 0.92 cm3/g et une distribution poreuse telle que les pores ayant un diamètre inférieur à 10 nm constitue 20 à 40% du volume poreux total, les pores ayant un diamètre compris entre 10 et 16 nm constituent 28.4 à 34.1 % du ,volume poreux total, les pores ayant un diamètre supérieur à 16 constituent 30 à 50 % du volume poreux total et les macropores ayant un diamètre supérieur à 25 nm représentent 25 à 40% du volume poreux total. L'utilisation d'un tel catalyseur dans un procédé d'hydrocraquage doux permet d'éviter la formation de sédiments insolubles pouvant colmater le réacteur de l'unité avale tout en l'obtention d'un taux de conversion élevé.

La demande de brevet EP 0 325 827 décrit des catalyseurs NiMoP sur un support silice alumine dispersée dans une matrice d'alumine utilisés dans des procédés d'hydrocraquage doux. L'objectif est donc principalement la désulfuration et la déazotation de charge hydrocarbonée tout en maintenant une conversion limitée de ladite charge qui ne dépasse pas les 50%.

Les performances de ces catalyseurs sont étroitement liées à leurs caractéristiques physicochimiques, et plus particulièrement à leurs caractéristiques texturales. Il est avantageux de diminuer la densité de remplissage des catalyseurs afin de minimiser les coûts en maintenant de hautes performances catalytiques. A cet égard, il est avantageux d'utiliser des catalyseurs à volume poreux total ajusté par l'introduction de macropores (On entend par macropores, des pores dont le diamètre est supérieur à 500 Å). Malgré un volume poreux total plus élevé, on maintient une bonne activité catalytique en diminuant les coûts en catalyseur.

Bien que de bonnes performances puissent être obtenues en améliorant les caractéristiques texturales, les performances de ces catalyseurs sont également liées à la nature de phase hydrogénante. L'activité hydrogénante va ainsi jouer un rôle dans les réactions d'hydrodésulfuration (HDS), d'hydrodénitrogénation (HDN), dhydrodéaromatisation (HDA) et sur la stabilité du catalyseur.

En voulant résoudre ces problèmes, la demanderesse a été conduite à préparer des catalyseurs d'hydrocraquage ayant une teneur adaptée en macropores et avec une fonction hydrogénante améliorées pour obtenir des performances catalytiques améliorées dans les procédés d'hydrocraquage. Elle a ainsi découvert de manière surprenante que l'adjonction d'un pourcentage contrôlé d'éléments dopants sur des catalyseurs ayant de telles caractéristiques texturales conduit à des performances catalytiques inattendues en hydrocraquage/hydroconversion et hydrotraitement.

Plus précisément, l'invention concerne un catalyseur dopé d'hydrocraquage sur un support alumino-silicate à teneur ajustée en macropores et les procédés d'hydrocraquage/hydroconversion et hydrotraitement le mettant en oeuvre.

## Techniques de caractérisation

Dans l'exposé qui suit de l'invention, on entend par surface spécifique, la surface spécifique B.E.T. déterminée par adsorption d'azote conformément à la norme ASTM D 3663-78 établie à partir de la méthode BRUNAUER-EMMETT-TELLER décrite dans le périodique « The Journal of American Society", 60, 309, (1938).

Dans l'exposé qui suit de l'invention, on entend par volume mercure des supports et des catalyseurs, le volume mesuré par intrusion au porosimètre à mercure selon la norme ASTM D4284-83 à une pression maximale de 4000 bar, utilisant une tension de surface de 484 dyne/cm et un angle de contact pour les supports alumine-silice de 140°. Une des raisons pour lesquelles il est préférable d'utiliser le support comme base pour définir la distribution poreuse tient dans le fait que l'angle de contact du mercure varie après imprégnation des métaux et ceci en fonction de la nature et de type de métaux. L'angle de mouillage a été pris égal à 140° en suivant les recommandations de l'ouvrage "Techniques de l'ingénieur, traité analyse et caractérisation, P 1050-5, écrits par Jean Charpin et Bernard Rasneur".

Afin d'obtenir une meilleure précision, la valeur du volume mercure en ml/g donnée dans le texte qui suit correspond à la valeur du volume mercure total (volume poreux total mesuré par intrusion au porosimètre à mercure) en ml/g mesurée sur l'échantillon moins la valeur du volume mercure en ml/g mesurée sur le même échantillon pour une pression correspondant à 30 psi (environ 2 bars). On définit également le diamètre moyen mercure comme étant un diamètre tel que tous les pores de taille inférieure à ce diamètre constituent 50% du volume poreux total mercure.

Afin de mieux caractériser la distribution poreuse, on définit enfin les critères de distribution poreuse suivants en mercure: le volume V1' qui est le volume des macropores avec un diamètre supérieur à 500 A et Le volume V2' qui est le volume des macropores avec un diamètre supérieur à 250 A correspond au volume contenu dans les pores de diamètre supérieur à 250A.

Afin de mieux caractériser la distribution poreuse, on définit enfin les critères de distribution poreuse suivants en mercure: le volume V1 correspond au volume contenu dans les pores dont le diamètre est inférieur au diamètre moyen moins 30 Å. Le volume V2 correspond au volume contenu dans les pores de diamètre supérieur ou égal au diamètre moyen moins 30 Å et inférieur au diamètre moyen plus 30 Å. Le volume V3 correspond au volume contenu dans les pores de diamètre supérieur ou égal au diamètre moyen plus 30 Å. Le volume V4 correspond au volume contenu dans les pores dont le diamètre est inférieur au diamètre moyen moins 15 Å. Le volume V5 correspond au volume contenu dans les pores de diamètre supérieur ou égal au diamètre moyen moins 15 Å et inférieur au diamètre moyen plus 15 Å. Le volume V6 correspond au volume contenu dans les pores de diamètre supérieur ou égal au diamètre moyen plus 15 Å.

La distribution poreuse mesurée par adsorption d'azote a été déterminée par le modèle Barrett-Joyner-Halenda (BJH). L'isotherme d'adsorption - désorption d'azote selon le modèle BJH est décrit dans le périodique "The Journal of American Society" , 73, 373, (1951) écrit par E.P.Barrett, L.G.Joyner et P.P.Halenda. Dans l'exposé qui suit de l'invention, on entend par volume adsorption azote, le volume mesuré pour $P/P_0 = 0,99$, pression pour laquelle il est admis que l'azote a rempli tous les pores. On définit le diamètre moyen désorption azote comme étant un diamètre tel que tous les pores inférieurs à ce diamètre constituent 50% du volume poreux (Vp) mesuré sur la branche de désorption de l'isotherme azote.

Par surface adsorption, on entend la surface mesurée sur la branche de l'isotherme d'adsorption. On se reportera par exemple à l'article de A. Lecloux "Mémoires Société Royale des Sciences de Liège, 6ème série, Tome I, fasc.4, pp.169-209 (1971)".

La teneur en sodium a été mesurée par spectrométrie d'absorption atomique.

La diffraction X est une technique pouvant être utilisée pour caractériser les supports et catalyseurs selon l'invention. Dans l'exposé qui suit, l'analyse des rayons X est réalisée sur poudre avec un diffractomètre Philips PW 1830 opérant en réflexion et équipé d'un monochromateur arrière en utilisant la radiation CoKalpha ($\lambda K_{\alpha 1} = 1.7890$ Å, $\lambda lK_{\alpha 2} = 1.793$ Å, rapport d'intensité $K_{\alpha 1}/K_{\alpha 2} = 0,5$). Pour le diagramme de diffraction X de l'alumine gamma, on se reportera à la base de données ICDD, fiche 10-0425. En particulier, les 2 pics les plus intenses sont situés à une position correspondant à un d compris entre 1,39 et 1,40 Å et un d compris entre 1,97 Å à 2,00 Å. On appelle d la distance inter-réticulaire qui est déduite de la position angulaire en utilisant la relation dite de Bragg ($2 d_{(hkl)} * \sin(\square) = n * \tilde{\square}$). Par alumine gamma, on entend dans la suite du texte entre autres par exemple une alumine comprise dans le groupe composé des alumines gamma cubique, gamma pseudo-cubique, gamma tétragonale, gamma mal ou peu cristallisée, gamma grande surface, gamma basse surface, gamma issue de grosse boehmite, gamma issue de boehmite cristallisée, gamma issue de boehmite peu ou mal cristallisée, gamma issue d'un mélange de boehmite cristallisée et d'un gel amorphe, gamma issue d'un gel amorphe, gamma en évolution vers delta . Pour les positions des pics de diffraction des alumines êta, delta et thêta, on peut se référer à l'article de B.C. Lippens, J.J. Steggerda, dans Physical and Chemical aspects of adsorbents and catalysts, E.G. Linsen (Ed.), Academic Press, London. 1970, p.171-211.

Pour les supports et catalyseurs selon l'invention, le diagramme de diffraction X met en évidence un pic large caractéristique de la présence de silice amorphe.

Par ailleurs, dans l'ensemble du texte qui suit, le composé d'alumine peut contenir une fraction amorphe difficilement détectable par les techniques de DRX. On sous-entendra donc par la suite que les composés d'alumine utilisés ou décrits dans le texte peuvent contenir une fraction amorphe ou mal cristallisée.

Les supports et catalyseurs selon l'invention ont été analysés par RMN MAS du solide de $^{27}$Al sur un spectromètre de la firme Brüker de type MSL 400, en sonde 4 mm. La vitesse de rotation des échantillons est de l'ordre de 11 kHz. Potentiellement, la RMN de l'aluminium permet de distinguer trois types d'aluminium dont les déplacements chimiques sont reportés ci-après :

Entre 100 et 40 ppm, aluminiums de type tétra-coordinés, notés $Al_{IV}$,
Entre 40 et 20 ppm, aluminiums de type penta-coordinés, notés $Al_V$,
Entre 20 et -100 ppm, aluminiums de type hexa-coordinés, notés $Al_{VI}$.

L'atome d'aluminium est un noyau quadripolaire. Dans certaines conditions d'analyse (champs de radiofréquence faible : 30 kHz, angle d'impulsion faible : $\pi/2$ et échantillon saturé en eau), la technique de RMN de rotation à l'angle magique (MAS) est une technique quantitative. La décomposition des spectres RMN MAS permet d'accéder directement à la quantité des différentes espèces. Le spectre est calé en déplacement chimique par rapport à une solution 1M de nitrate d'aluminium. Le signal d'aluminium est à zéro ppm. Nous avons choisi d'intégrer les signaux entre 100 et 20 ppm pour les $Al_{IV}$ et $Al_V$, ce qui correspond à l'aire 1, et entre 20 et -100 ppm pour $Al_{VI}$, ce qui correspond à l'aire 2. Dans l'exposé qui suit de l'invention, on entend par proportion des $Al_{VI}$ octaédriques le rapport suivant: aire 2/ (aire 1 + aire 2).

L'environnement du silicium des alumines-silice est étudié par la RMN de $^{29}$Si. Les tables de déplacements chimiques en fonction du degré de condensation ont été déduites de l'ouvrage de G.Engelhardt et D.Michel : «High resolution solid-state NMR of silicates and zeolites » (Wiley), 1987.

La RMN 29 Si montre les déplacements chimiques des différentes espèces de silicium telles que $Q^4$ (-105ppm à - 120 ppm), $Q^3$ (-90ppm à -102 ppm) et $Q^2$ (-75ppm à - 93 ppm). Les sites avec un déplacement chimique à -102 ppm peuvent être des sites de type $Q^3$ ou $Q^4$, nous les appelons sites $Q^{3-4}$. Les définitions des sites sont les suivantes:

sites $Q^4$ : Si lié à 4Si (ou Al),
sites $Q^3$ : Si lié à 3 Si(ou Al) et 1 OH
sites $Q^2$ : Si lié à 2 Si(ou Al) et 2 OH;

Les alumines-silice de l'invention sont composées de silicium de types $Q^2$, $Q^3$, $Q^{3-a}$ et $Q^4$. De nombreuses espèces seraient de type $Q^2$, approximativement de l'ordre de 10 à 80%, de préférence 20 à 60 % et manière préférée de 20 à 40%. La proportion des espèces $Q^3$ et $Q^{3-4}$ est également importante, approximativement de l'ordre de 5 à 50 % et de manière préférée de 10 à 40% pour les deux espèces.

L'environnement des siliciums a été étudié par RMN CP MAS $^1H\rightarrow^{29}Si$, (300 MHz, vitesse de rotation : 4000 Hz). Dans ce cas, seul le silicium lié à des liaisons OH doit répondre. La table des déplacements chimiques utilisés est celle de Kodakari et al. , Langmuir, 14, 4623-4629, 1998. Les attributions sont les suivantes : -108 ppm (Q4), -99 ppm (Q3/Q4(1 Al)), -91 ppm (Q3/Q3(1Al)) , -84 ppm (Q2/Q3(2Al), -78 ppm (Q2/Q3(3Al) et-73 ppm Q1/Q2 (3 Al). Les alumines-silice de l'invention se présentent sous la forme de superposition de plusieurs massifs. Le pic principal de ces massifs est généralement situé à -110 ppm.

Une méthode de caractérisation des supports et catalyseurs selon l'invention pouvant être utilisée est la microscopie électronique par transmission (MET). Pour cela on utilise un microscope électronique (du type Jeol 2010 ou Philips Tecnai20F éventuellement avec balayage) équipé d'un spectromètre à dispersion d'énergie (EDS) pour l'analyse des rayons X (par exemple un Tracor ou un Edax). Le détecteur EDS doit permettre la détection des éléments légers. L'association de ces deux outils, MET et EDS, permet de combiner l'imagerie et l'analyse chimique locale avec une bonne résolution spatiale.

Pour ce type d'analyse, les échantillons sont finement broyés à sec dans un mortier ; la poudre est ensuite incluse dans de la résine pour réaliser des coupes ultrafines d'épaisseur 70 nm environ. Ces coupes sont recueillies sur des grilles de Cu recouvertes d'un film de carbone amorphe à trous servant de support. Elles sont ensuite introduites dans le microscope pour observation et analyse sous vide secondaire. En imagerie, on distingue alors aisément les zones d'échantillon des zones de résine. On procède ensuite à un certain nombre d'analyses, 10 au minimum, de préférence comprises entre 15 et 30, sur différentes zones de l'échantillon industriel. La taille du faisceau électronique pour l'analyse des zones (déterminant approximativement la taille des zones analysées) est de 50 nm de diamètre au maximum, de préférence de 20 nm, de manière encore plus préférée 10, 5, 2 ou 1nm de diamètre. En mode balayé, la zone analysée sera fonction de la taille de la zone balayée et non plus de la taille du faisceau généralement réduit.

Le traitement semi quantitatif des spectres X recueillis à l'aide du spectromètre EDS permet d'obtenir la concentration relative de Al et de Si (en % atomique) et le rapport Si/Al pour chacune des zones analysées. On peut alors calculer la moyenne $Si/Al_m$ et l'écart type □ de cet ensemble de mesures. Dans les exemples non limitatifs de l'exposé qui suit de l'invention, la sonde de 50 nm est la sonde utilisée pour caractériser les supports et catalyseurs selon l'invention sauf mention contraire.

La densité de remplissage tassée (DRT) est mesurée de la manière décrite dans l'ouvrage " Applied Heterogenous Catalysis " de J.F. Le Page, J. Cosyns, P. Courty, E. Freund, J-P. Franck, Y. Jacquin, B. Juguin, C. Marcilly, G. Martino, J. Miquel, R. Montarnal, A. Sugier, H. Van Landeghem, Technip, Paris, 1987. Un cylindre gradué de dimensions acceptables est rempli de catalyseur par additions successives; et entre chaque addition, le catalyseur est tassé en secouant le cylindre jusqu'à atteindre un volume constant. Cette mesure est généralement réalisée sur 1000 cm3 de catalyseur tassé dans un cylindre dont le ratio hauteur sur diamètre est proche de 5:1. Cette mesure peut être, de manière préférée, réalisée sur des appareils automatisés tels que Autotap® commercialisé par Quantachrome®.

L'acidité de la matrice est mesurée par spectrométrie Infra-Rouge (IR). Les spectres IR sont enregistrés sur un interféromètre Nicolet de type Nexus-670 sous une résolution de 4 cm-1 avec une apodisation de type Happ-Gensel. L'échantillon (20 mg) est pressé sous la forme d'une pastille auto-supportée, puis est placé dans une cellule d'analyse in-situ (25°C à 550°C, four déporté du faisceau IR, vide secondaire de 10-6 mbar). Le diamètre de la pastille est de 16 mm. L'échantillon est prétraité de la façon suivante afin d'éliminer l'eau physisorbée et de déshydroxyler partiellement la surface du catalyseur afin d'obtenir une image représentative de l'acidité du catalyseur en fonctionnement :

- montée en température de 25°C à 300°C en 3 heures
- palier de 10 heures à 300°C
- descente de température de 300°C à 25°C en 3 heures

La sonde basique (pyridine) est ensuite adsorbée à pression saturante à 25°C puis thermo-désorbée selon les paliers suivants :

- 25°C pendant 2 heures sous vide secondaire

- 100°C 1 heure sous vide secondaire

- 200°C 1 heure sous vide secondaire

- 300°C 1 heure sous vide secondaire

Un spectre est enregistré à 25°C à la fin du prétraitement et à chaque palier de désorption en mode transmission avec un temps d'accumulation de 100 s. Les spectres sont ramenés à iso-masse (donc supposés à iso-épaisseur) (20 mg exactement). Le nombre de sites de Lewis est proportionnel à la surface du pic dont le maximum se situe vers 1450 cm-1, tout épaulement étant inclus. Le nombre de sites de Bronsted est proportionnel à la surface du pic dont le maximum se situe vers 1545 cm-1. Le rapport du nombre de sites de Bronsted /nombre de sites de Lewis B/L est estimé égal au rapport des surfaces de deux pics décrits ci-dessus. On utilise généralement la surface des pics à 25°C. Ce rapport B/L est de manière générale calculé à partir du spectre enregistré à 25°C à la fin du prétraitement.

Lorsqu'un élément dopant, P et éventuellement B et/ou Si, est introduit, sa répartition et sa localisation peuvent être déterminées par des techniques telles que la microsonde de Castaing (profil de répartition des divers éléments), la microscopie électronique par transmission couplée à une analyse X des composants du catalyseurs, ou bien encore par l'établissement d'une cartographie de répartition des éléments présents dans le catalyseur par microsonde électronique. Ces techniques permettent de mettre en évidence la présence de ces éléments exogènes ajoutés après la synthèse de l'alumine-silice selon l'invention.

La composition globale du catalyseur peut être déterminée par fluorescence X sur le catalyseur à l'état pulvérulent ou par absorption atomique après attaque acide du catalyseur.

La mesure de la composition locale à l'échelle du micron, par opposition à la composition globale du catalyseur, peut s'effectuer par microsonde électronique Cette mesure peut s'effectuer en déterminant les teneurs en métal sur des zones de quelques microns cubes le long du diamètre d'une particule de catalyseurs que l'on appelle unités de mesures. Cette mesure permet d'évaluer la répartition macroscopique des éléments à l'intérieur des particules. Elle peut être complétée éventuellement à l'échelle du nanomètre par STEM (Scanning Transmission Electron Microscopy (Microscopie électronique de transmission à balayage)).

Les analyses sont conduites sur une microsonde électronique CAMECA SX100 (équipée de 5 spectromètres à dispersion de longueur d'onde)(appareillage préféré) ou éventuellement sur JEOL 8800R(4 spectromètres) Les paramètres d'acquisition sont les suivants : tension d'accélération 20 kV, courant 80 ou 200 nA et temps de comptage 10 s ou 20 s selon le niveau de concentration. Les particules sont enrobées dans la résine puis polies jusqu'à leur diamètre. On notera que l'appellation diamètre ne se réfère pas uniquement à une forme en bille ou en extrudé, mais plus généralement à toute forme de particules ; est dénommée diamètre en fait la longueur représentative de la particule sur laquelle est effectuée la mesure.

Les mesures sont effectuées sur un échantillon représentatif du lit ou du lot de catalyseur qui sera utilisé sur un lit catalytique. On a considéré que les analyses devraient être faites sur au moins 5 particules avec au moins 30 mesures par particule, uniformément réparties le long du diamètre.

On appelle CMo, CNi, CW et CP les concentrations locales (exprimées en %) respectivement en Molybdène, Nickel Tungstène et phosphore

On pourrait tout aussi bien exprimer les concentrations en % atomique, les fluctuations relatives étant les mêmes.

Il est intéressant de préparer des catalyseurs présentant des concentrations homogènes CMo, CNi, CW et CP le long de l'extrudé. Il est également intéressant de préparer des catalyseurs présentant des concentrations CMo, CNi, CW et CP au coeur et en périphérie différente. Ces catalyseurs présentent des profils de répartition dits en « cuvette » ou en « dôme ». Un autre type de répartition est celle en croûte où les éléments de la phase active sont répartis en surface.

## Description détaillée de l'invention

Plus précisément, l'invention concerne un catalyseur comprenant :

- au moins un élément hydro-déshydrogénant choisi dans le groupe formé par les éléments du groupe VIB et du groupe VIII de la classification périodique,
- de 0,6 à 2.5% poids d'oxyde de phosphore comme élément dopant, (en combinaison éventuellement avec bore et/ou silicium),
- ledit catalyseur ayant un volume poreux total mesuré par porosimétrie au mercure compris entre 0.35 et 0.74 ml/g
- et un support non zéolitique à base d'alumine-silice
  ladite alumine-silice présentant les caractéristiques suivantes :

  - un pourcentage de silice compris entre 5 et 95 % poids, de préférence entre 10 et 80%, de manière plus préférée entre 20 et 60 % et de manière très préférée le pourcentage de silice est strictement supérieur à 25% et inférieur à 50% et de manière encore plus préférée, strictement supérieur à 25% et inférieur à 42%.

- un contenu en sodium inférieur à 0.03% poids,
- un volume poreux total mesuré par porosimétrie au mercure compris entre 0.45 et 0.96 ml/g,
- une porosité telle que :

i) le volume des mésopores avec un diamètre compris entre 40 et 150 Å et un diamètre moyen poreux compris entre 80 et 140 Å (de préférence entre 80 et 120 A) représente 40-70% du volume poreux total mesuré par porosimétrie au mercure

ii) le volume des macropores avec un diamètre supérieur à 500 Å représente 30-60% du volume poreux total mesuré par porosimétrie au mercure

iii/ avantageusement, le volume des pores, dont le diamètre est supérieur à 250 Å représente entre 20 et 80% du volume poreux total et de préférence entre 25% et 60% du volume poreux total et de manière encore plus préférée au moins 30% du volume poreux total.

- une surface spécifique BET comprise entre 100 et 550 m$^2$/g , de préférence comprise entre 150 et 500 m$^2$/g, de manière préférée inférieure à 350 m$^2$/g et de manière encore plus préférée inférieure à 250 m$^2$/g,
- un diagramme de diffraction X qui contient au moins les raies principales caractéristiques d'au moins une des alumines de transition comprise dans le groupe composé par les alumines alpha, rhô, khi, êta, gamma, kappa, thêta et delta.

L'invention concerne également un procédé d'hydrocraquage/hydroconversion, et un procédé d'hydrotraitement de charges hydrocarbonées avec lesdits catalyseurs.

*Caractéristiques du support du catalyseur selon l'invention*

L'alumine silice utilisée dans le catalyseur selon l'invention est de préférence une alumine-silice homogène à l'échelle du micromètre et dans laquelle la teneur en impuretés cationiques (par exemple Na$^+$) est inférieure à 0,1%poids, de manière préférée inférieure à 0,05% poids et de manière encore plus préférée inférieure à 0,025% poids et la teneur en impuretés anioniques (par exemple SO$_4$$^{2-}$, Cl$^-$) est inférieure à 1% poids, de manière préférée inférieure à 0,5% poids et de manière encore plus préférée inférieure à 0,1% poids.

Ainsi tout procédé de synthèse d'alumine-silice connu de l'homme du métier conduisant à une alumine-silice homogène à l'échelle du micromètre et dans lequel les impuretés cationiques (par exemple Na$^+$) peuvent être ramenées à moins de 0,1 %, de manière préférée à une teneur inférieure à 0,05% poids et de manière encore plus préférée inférieure à 0,025% poids et dans lequel les impuretés anioniques (par exemple SO$_4$$^{2-}$, Cl$^-$) peuvent être ramenées à moins de 1% et de manière plus préférée à une teneur inférieure à 0,05% poids convient pour préparer les supports objet de l'invention.

Le support du catalyseur selon l'invention est un support non zéolitique à base d'alumine-silice (c'est-à-dire comprenant alumine et silice) de teneur massique en silice (SiO$_2$) supérieure à 5% poids et inférieure ou égale à 95% poids, de préférence comprise entre 10 et 80% poids, de manière préférée une teneur en silice supérieure à 20% poids et inférieure à 60% poids et de manière encore plus préférée, le pourcentage de silice est strictement supérieur à 25% et inférieur à 50% et de manière encore plus préférée, strictement supérieur à 25% et inférieur à 42%.

Le pourcentage de silice agit sur l'acidité du catalyseur et donc sur son activité convertissante.

En effet, en hydroconversion et plus particulièrement en hydrocraquage, la conversion des molécules hydrocarbonées se fait sur les sites acides. Les interfaces entre la silice et l'alumine sont à l'origine de l'acidité des alumines silices. Le site actif est en effet le proton de l'hydroxyle pontant entre le silicium et l'aluminium. L'acidité globale dépend donc du nombre de sites protoniques. Elle est augmentée avec la teneur en silice car la surface globale des interfaces silice-alumine croît.

Selon un mode préféré de l'invention, le support de catalyseur est constitué d'alumine-silice seule.

Selon un autre mode de réalisation de l'invention, le support comprend de 1 à 40% en poids de liant. Le support peut alors résulter du mélange de l'alumine-silice et d'au moins un liant choisi dans le groupe formé par la silice, l'alumine, les argiles, l'oxyde de titane, l'oxyde de bore et la zircone.

L'environnement du silicium des alumines-silice est étudié par la RMN de $^{29}$Si. Les alumines-silice de l'invention sont composées de silicium de types Q$^2$, Q$^3$, Q$^{3-4}$ et Q$^4$. De nombreuses espèces sont de type Q$^2$, approximativement de l'ordre de 10 à 80%, de préférence 20 à 60 % et manière préférée de 30 à 50%. La proportion des espèces Q$^3$ et Q$^{3-4}$ est également importante, approximativement de l'ordre de 5 à 50 % et de manière préférée de 10 à 40% pour les deux espèces.

De manière préférée, l'alumine-silice comprend de 30 à 50% de sites Q$^2$, dans lesquels un atome de Si est lié à deux atomes de Si ou Al et à deux groupes OH et comprend également 10-30 % de sites Q$^3$ dans lesquels un atome de Si est lié à trois atomes de Si ou Al ou à un groupe OH.

L'environnement des siliciums a été étudié par RMN CP MAS $^1$H →$^{29}$Si, (300 MHz, vitesse de rotation : 4000 Hz). Dans ce cas, seul le silicium lié à des liaisons OH doit répondre. La table des déplacements chimiques utilisés est celle de Kodakari et al. , Langmuir, 14, 4623-4629, 1998. Les attributions sont les suivantes : -108 ppm (Q4), -99 ppm (Q3/Q4 (1 Al)), -91 ppm (Q3/Q3(1Al)) , -84 ppm (Q2/Q3(2Al), -78 ppm (Q2/Q3(3Al) et-73 ppm Q1/Q2 (3 Al).

Les alumines-silice de l'invention se présentent généralement sous la forme de superposition de plusieurs massifs. Le pic principal de ces massifs est avantageusement situé à-110 ppm.

Les spectres RMN MAS du solide de $^{27}$Al des supports et des catalyseurs selon l'invention montrent deux massifs de pics distincts. Un premier type d'aluminium dont le maximum résonne vers 10 ppm s'étend entre -100 et 20 ppm. La position du maximum suggère que ces espèces sont essentiellement de type $Al_{VI}$ (octaédrique). Un deuxième type d'aluminium minoritaire dont le maximum résonne vers 60 ppm s'étend entre 20 et 110 ppm. Ce massif peut être décomposé en au moins deux espèces. L'espèce prédominante de ce massif correspondrait aux atomes d'$Al_{IV}$ (tétraédrique). Pour les supports et catalyseurs de la présente invention, avantageusement, la proportion des $Al_{VI}$ octaédriques est supérieure à 50%, de manière préférée supérieure à 60%, et de manière encore plus préférée supérieure à 70%.

Dans un mode de réalisation de l'invention, l'alumine-silice comprend au moins deux zones alumino-silicates, les dites zones ayant des rapports Si/Al inférieurs ou supérieurs au rapport Si/Al global déterminé par fluorescence X. Ainsi un support ayant un rapport Si/Al égal à 0,5 comprend par exemple deux zones alumino-silicates, l'une des zones a un rapport Si/Al déterminé par MET inférieur à 0,5 et l'autre zone a un rapport Si/Al déterminé par MET compris entre 0,5 et 2,5.

Dans un autre mode de réalisation de l'invention, l'alumine-silice comprend une seule zone alumine-silice, ladite zone ayant un rapport Si/Al égal au rapport Si/Al global déterminé par fluorescence X et inférieur à 2,3.

L'acidité du support de catalyseur selon l'invention peut être de manière avantageuse, sans que cela ne restreigne la portée de l'invention, mesurée par suivi IR de la thermo-désorption de la pyridine. Généralement, le rapport B/L, tel que décrit ci-dessus, du support selon l'invention est compris entre 0,05 et 1, de manière préférée entre 0,05 et 0,7, de manière très préférée entre 0,05 et 0,5.

Les diffractogrammes des alumine-silices de l'invention, obtenus par diffraction aux rayons X, correspondent à un mélange de la silice et de l'alumine avec une certaine évolution entre l'alumine gamma et la silice en fonction de la teneur en $SiO_2$ des échantillons.

Les caractéristiques texturales de l'alumine-silice utilisée dans le catalyseur selon l'invention sont les suivantes :

- une surface spécifique BET comprise entre 100 et 550 m$^2$/g , de préférence comprise entre 150 et 500 m$^2$/g, de manière préférée inférieure à 350 m$^2$/g et de manière encore plus préférée inférieure à 250 m$^2$/g,
- un volume poreux total mesuré par porosimétrie au mercure compris entre 0.45 et 0.96 ml/g,
- une porosité telle que :

  i/ Le volume des mésopores dont le diamètre est compris entre 40Å et 150Å, et dont le diamètre moyen varie entre 80 et 140 Å (de préférence entre 80 et 120 A) représente entre 40 et 70% du volume poreux total précédemment défini.

  ii/ Le volume des macropores, dont le diamètre est supérieur à 500 Å, et de préférence compris entre 1000 Å et 10000 Å représente entre 30 et 60% du volume poreux total et de manière préférée le volume des macropores représente au moins 35% du volume poreux total.

  iii/ avantageusement, le volume des pores, dont le diamètre est supérieur à 250 Å représente entre 20 et 80% du volume poreux total et de préférence entre 25% et 60% du volume poreux total et de manière encore plus préférée au moins 30% du volume poreux total.

*Caractéristiques du catalyseur selon l'invention*

Le catalyseur selon l'invention comprend donc :

- de préférence une teneur en impuretés cationiques inférieure à 0,1%poids, de manière préférée inférieure à 0,05% poids et de manière encore plus préférée inférieure à 0,025% poids. On entend par teneur en impuretés cationiques la teneur totale en alcalins.

- de préférence une teneur en impuretés anioniques inférieure à 1% poids, de manière préférée inférieure à 0,5% poids et de manière encore plus préférée inférieure à 0,1% poids.

- au moins un élément hydro-déshydrogénant choisi dans le groupe formé par les éléments du groupe VIB et du groupe VIII de la classification périodique,

- de préférence une teneur massique en métal(aux) du groupe VIB, sous forme métallique ou sous forme oxyde comprise entre 1 et 50 % en poids, de manière préférée entre 1,5 et 35 %, et de manière encore plus préférée entre 1,5 et 30%,

- de préférence une teneur massique en métaux du groupe VIII, sous forme métallique ou sous forme oxyde comprise entre 0,1 et 30 % en poids, de manière préférée entre 0,2 et 25 % et de manière encore plus préférée entre 0,2 et 20%,

- de 0,6 à 2,5% poids d'oxyde de phosphore comme élément dopant déposé sur le catalyseur (on entend par élément dopant un élément introduit après la préparation du support alumino-silicate décrit précédemment.), éventuellement en combinaison avec le bore et/ou le silicium. Ainsi on pourra utiliser comme éléments dopants une combinaison phosphore et bore ou une combinaison phosphore, bore et silicium. Lorsque les éléments bore et/ou silicium sont présents sur le catalyseur, les teneurs massiques en bore et silicium, calculées sous leur forme oxyde, sont comprises entre 0,01 et 6%, de préférence entre 0,1 et 4%, de manière plus préférée entre 0.2 et 2.5%.

- éventuellement au moins un élément du groupe VIIB (manganèse par exemple et de préférence), et une teneur pondérale comprise entre 0 et 20%, de préférence entre 0 et 10 % du composé sous forme oxyde ou métal.

- éventuellement au moins un élément du groupe VB (niobium par exemple et de préférence), et une teneur pondérale comprise entre 0 et 40%, de préférence entre 0 et 20% du composé sous forme oxyde ou métal,

- Le catalyseur selon l'invention a un volume poreux total mesuré par porosimétrie au mercure compris entre 0.35 et 0.74 ml/g et de préférence compris entre 0.4 et 0.6 ml/g,

- La diminution de la valeur du volume poreux total entraîne l'augmentation de la densité du catalyseur, ce qui permet un remplissage plus important du réacteur et par conséquent l'augmentation du débit de l'unité de traitement. Par ailleurs, il est prouvé qu'il est possible de tirer profit de l'utilisation d'un catalyseur ayant une densité plus élevée dans des petites unités. L'utilisation d'un tel catalyseur permet aussi le dégoulottage d'unités déjà existantes de manière à ce que une quantité plus importante de la charge soit convertie.

- Avantageusement, le catalyseur selon l'invention ne contient pas de fluor.

- La densité de remplissage tassée du catalyseur est généralement supérieure à 0.7 g/cm3 et de préférence comprise entre 0.7 et 0.9 g/cm3 du fait des caractéristiques poreuses du catalyseur.

- un support non zéolitique à base d'alumine-silice, ladite alumine-silice présentant les caractéristiques suivantes :

  - un pourcentage de silice compris entre 5 et 95 % poids, de préférence entre 10 et 80%, de manière plus préférée entre 20 et 60 % et de manière très préférée le pourcentage de silice est strictement supérieur à 25% et inférieur à 50% et de manière encore plus préférée, strictement supérieur à 25% et inférieur à 42%.
  - un contenu en sodium inférieur à 0.03% poids,
    un volume poreux total mesuré par porosimétrie au mercure compris entre 0.45 et 0.96 ml/g,
  - une porosité telle que :

    i/ Le volume des mésopores dont le diamètre est compris entre 40Å et 150Å, et dont le diamètre moyen varie entre 80 et 140 Å (de préférence entre 80 et 120 A) représente entre 40 et 70% du volume poreux total précédemment défini.

    ii/ Le volume des macropores, dont le diamètre est supérieur à 500 Å, et de préférence compris entre 1000 Å et 10000 Å représente entre 30 et 60% du volume poreux total et de manière encore plus préférée le volume des macropores représente au moins 35% du volume poreux total.

    iii/ Avantageusement, le volume des pores, dont le diamètre est supérieur à 250 Å représente entre 20 et 80% du volume poreux total et de préférence entre 25% et 60% du volume poreux total et de manière encore plus préférée au moins 30% du volume poreux total.

  - une surface spécifique BET comprise entre 100 et 550 $m^2/g$, de préférence comprise entre 150 et 500 $m^2/g$, de manière préférée inférieure à 350 $m^2/g$ et de manière encore plus préférée inférieure à 250 $m^2/g$,
  - un diagramme de diffraction X qui contient au moins les raies principales caractéristiques d'au moins une des alumines de transition comprises dans le groupe composé par les alumines rhô, khi, kappa, êta, gamma, thêta et delta, de manière préférée qui contient au moins les raies principales caractéristiques d'au moins une des alumines de transition compris dans le groupe composé par l'alumine gamma, êta, thêta et delta, et de manière plus préférée qui contient au moins les raies principales caractéristiques de l'alumine gamma et êta, et de manière encore plus préférée qui contient les pics à un d compris entre 1,39 à 1,40 Å et à un d compris entre 1,97 Å à 2,00 Å.

La teneur en phosphore est comprise entre 0,6 et 2,5% poids d'oxyde.

De préférence, le catalyseur est à base de nickel, de molybdène et de tungstène et/ou de nickel et de tungstène.

Un catalyseur préféré selon l'invention comprend l'association nickel-tungstène et une teneur en phosphore comprise entre 0,6 et 2,5% poids d'oxyde.

De manière préférée, l'alumine-silice comprend de 30 à 50% de sites $Q^2$, dans lesquels un atome de Si est lié à deux atomes de Si ou Al et à deux groupes OH et comprend également 10-30 % de sites $Q^3$ dans lesquels un atome de Si est lié à trois atomes de Si ou Al ou à un groupe OH.

Selon un mode préféré de l'invention, le support de catalyseur est constitué d'alumine-silice seule.

Selon un autre mode de réalisation de l'invention, le support comprend de 1 à 40% en poids de liant. Le support peut alors résulter du mélange de l'alumine-silice et d'au moins un liant choisi dans le groupe formé par la silice, l'alumine, les argiles, l'oxyde de titane, l'oxyde de bore et la zircone.

Dans le catalyseur, la proportion des $Al_{VI}$ octaédriques déterminée par l'analyse des spectres RMN MAS du solide de $^{27}Al$ est généralement supérieure à 50%.

Le catalyseur peut également contenir une proportion mineure d'au moins un élément promoteur choisi dans le groupe formé par la zircone et le titane.

De préférence, le catalyseur est soumis à un traitement hydrothermal après la synthèse, comme décrit ultérieurement.

De préférence, le catalyseur est soumis à un traitement de sulfuration, comme décrit ultérieurement.

*Test standard d'activité : évaluation des catalyseurs selon l'invention*

L'acidité et la performance en hydrogénation des catalyseurs selon l'invention peuvent être évaluées par un test catalytique d'un mélange de molécules modèles : l'hydrogénation du toluène et l'isomérisation du cyclohexane. Le test catalytique permettant de contrôler l'hydrogénation et l'acidité des catalyseurs est réalisé selon le protocole suivant :

Les catalyseurs sont sulfurés in situ en dynamique dans un réacteur tubulaire à lit fixe traversé d'une unité pilote de type catatest (constructeur Vinci Technologies), les fluides circulant de haut en bas. Les mesures d'activité hydrogénante et isomérisante sont effectuées immédiatement après la sulfuration sous pression sans remise à l'air avec la charge d'hydrocarbures qui a servi à sulfurer les catalyseurs.

La charge de sulfuration et de test est composée de 5,8 % de diméthyl disulfure (DMDS), 20 % de toluène et 74,2 % de cyclohexane en poids. On mesure ainsi les activités catalytiques stabilisées de volumes égaux de catalyseurs dans la réaction d'hydrogénation du toluène. Le suivi de l'isomérisation du cyclohexane, diluant du toluène, permet d'estimer l'acidité des catalyseurs.

Les conditions de mesure d'activité sont les suivantes (en considérant une vaporisation totale et la loi des gaz parfaits) :

Pression totale : 6,0 MPa
Pression de toluène : 0,38 MPa
Pression de cyclohexane : 1,55 MPa
Pression d'hydrogène : 3,64 MPa
Pression d'$H_2S$ : 0,22 MPa
Volume de catalyseur : 40 cc
Débit de charge : 80 cc/h
Vitesse spatiale horaire : 21/1/h$^{-1}$
Débit d'hydrogène : 36 l/h
Température de sulfuration et de test : 350°C (3°C/min).

Des prélèvements de l'effluent liquide sont analysés par chromatographie en phase gazeuse. La détermination des concentrations molaire en toluène non converti (T) et des concentrations des produits d'hydrogénation : le méthyle cyclohexane (MCC6), l'éthyle cyclopentane (EtCC5) et les diméthyle cyclopentane (DMCC5) permettent de calculer un taux d'hydrogénation de toluène $X_{HYD}$ défini par :

$$X_{HYD}\,(\%) = 100 * (MCC6 + EtCC5 + DMCC5) / (T + MCC6 + EtCC5 + DMCC5)$$

Le taux d'isomérisation du cyclohexane $X_{150}$ est calculé de la même façon à partir des concentrations en cyclohexane non converti et de son produit de réaction, le méthyl cyclopentane. La réaction d'hydrogénation du toluène et d'isomérisation du cyclohexane étant d'ordre 1 dans nos conditions de test et le réacteur se comportant comme un réacteur piston idéal, on calcule l'activité hydrogénante $A_{HYD}$ et isomérisante $A_{ISO}$ des catalyseurs en appliquant la formule: $Ai = \ln(100/(100-X_i))$

Avantageusement, le catalyseur selon l'invention possède dans le test standard d'activité une activité $A_{HYD} > 0.\,7$ et une activité $A_{ISOM} > 0.1$, de manière préférée $A_{HYD} > 0.9$ et $A_{ISOM} > 0.12$, de manière plus préférée $A_{HYD} > 1.2$ et $A_{ISOM} > 0.13$ et de manière encore plus préférée $A_{HYD} > 1.4$ et $A_{ISOM} > 0.13$.

Le rapport d'activité hydrogénante sur activité isomérisante 1-YA est égal à $A_{HYD}/A_{ISO}$.

Le rapport d'activité hydrogénante sur activité isomérisante H/A est avantageusement compris entre 6,5 et 30, de manière préférée entre 7 et 30, de manière très préférée entre 7,5 et 25, de manière plus préférée entre 8,5 et 20 et de manière encore plus préférée entre 9,5 et 15.

*Procédés de préparation*

Les catalyseurs selon l'invention peuvent être préparés selon toutes les méthodes bien connues de l'homme du métier.

Un procédé préféré de préparation du catalyseur selon la présente invention comprend les étapes suivantes :

Selon un mode de préparation préféré, le précurseur est obtenu par mise en forme directe de l'alumine-silice seule ou par mise en forme de l'alumine-silice avec au moins un liant, puis séchage et calcination. Les éléments des groupes VIB et/ou VIII, et éventuellement ceux choisis parmi le phosphore, le bore, le silicium et éventuellement les éléments des groupes VB, et VIIB, sont alors éventuellement introduits par toute méthode connue de l'homme du métier, avant ou après la mise en forme et avant ou après la calcination du précurseur ou du catalyseur.

L'élément hydrogénant peut être introduit à toute étape de la préparation, de préférence lors du mélange, ou de manière très préférée après mise en forme. La mise en forme est suivie d'une calcination, l'élément hydrogénant peut également être introduit avant ou après cette calcination. La préparation se termine généralement par une calcination à une température de 250 à 600°C. Une autre des méthodes préférées selon la présente invention consiste à mettre en forme l'alumine-silice sans liant après un malaxage de cette dernière, puis passage de la pâte ainsi obtenue au travers d'une filière pour former des extrudés de diamètre compris entre 0,4 et 4 mm. La fonction hydrogénante peut être alors introduite en partie seulement (cas, par exemple, des associations d'oxydes de métaux des groupes VIB et VIII) ou en totalité, au moment du malaxage. Elle peut également être introduite par une ou plusieurs opérations d'échange ionique sur le support calciné constitué d'au moins une alumine-silice, éventuellement mise en forme avec un liant, à l'aide de solutions contenant les sels précurseurs des métaux choisis lorsque ceux-ci appartiennent au groupe VIII. Elle peut aussi être introduite par une ou plusieurs opérations d'imprégnation du support mis en forme et calciné, par une solution des précurseurs des oxydes des métaux des groupes VIII (notamment le cobalt et le nickel) lorsque les précurseurs des oxydes des métaux du groupe VIB (notamment le molybdène ou le tungstène) ont été préalablement introduits au moment du malaxage du support. Elle peut enfin également être introduite, de façon très préférée par une ou plusieurs opérations d'imprégnation du support calciné constitué d'au moins une alumine-silice selon l'invention et éventuellement d'au moins un liant, par des solutions contenant les précurseurs des oxydes de métaux des groupes VI et/ou VIII, les précurseurs des oxydes de métaux de groupe VIII étant de préférence introduits après ceux du groupe VIB ou en même temps que ces derniers.

D'une façon préférée, le support est imprégné par une solution aqueuse. L'imprégnation du support est de préférence effectuée par la méthode d'imprégnation dite "à sec" bien connue de l'homme du métier. L'imprégnation peut être effectuée en une seule étape par une solution contenant l'ensemble des éléments constitutifs du catalyseur final.

Le catalyseur de la présente invention peut donc renfermer au moins un élément du groupe VIII tel que fer, cobalt, nickel, ruthénium, rhodium, palladium, osmium, iridium ou platine. Parmi les métaux du groupe VIII on préfère employer un métal choisi dans le groupe formé par le fer, le cobalt, le nickel, le platine , le palladium et le ruthénium. Le catalyseur selon l'invention peut également renfermer au moins un élément du groupe VIB, de préférence le tungstène et le molybdène. D'une manière avantageuse on utilise les associations de métaux suivantes : nickel-molybdène, cobalt-molybdène, fer-molybdène, fer-tungstène, nickel-tungstène, cobalt-tungstène, platine-palladium, les associations préférées sont : nickel-molybdène, cobalt-molybdène, cobalt-tungstène et encore plus avantageusement platine-palladium et nickel-tungstène. Il est également possible d'utiliser des associations de trois métaux par exemple nickel-cobalt-molybdène, nickel-molybdène-tungstène, nickel-cobalt-tungstène. D'une manière avantageuse on utilise les associations de métaux suivantes : nickel-niobium-molybdène, cobalt-niobium-molybdène, fer-niobium-molybdène, nickel-niobium-tungstène, cobalt-niobium-tungstène, fer-niobium-tungstène, les associations préférées étant : nickel-niobium-molybdène, cobalt-niobium-molybdène. Il est également possible d'utiliser des associations de quatre métaux par exemple nickel-cobalt-niobium-molybdène. On peut également utiliser des associations contenant un métal noble tel que ruthénium-niobiuin-molybdène, ou encore ruthénium-nickel-niobium-molybdène.

L'un au moins des éléments suivants : phosphore et éventuellement bore et/ou silicium et éventuellement l' (les) élément(s) choisi(s) dans le(s) groupe(s) VIIB et VB, sont introduits dans le catalyseur à tout niveau de la préparation et selon toute technique connue de l'homme du métier.

Une méthode préférée selon l'invention consiste à déposer le ou les éléments dopants choisis sur le précurseur calciné ou non, de préférence calciné. Pour le dépôt de bore par exemple, on prépare une solution aqueuse d'au moins un sel de bore tel que le biborate d'ammonium ou le pentaborate d'ammonium en milieu alcalin et en présence d'eau oxygénée et on procède à une imprégnation dite à sec, dans laquelle on remplit le volume des pores du précurseur par la solution contenant par exemple le bore. Dans le cas où l'on dépose par exemple également du silicium, on utilisera par exemple une solution d'un composé du silicium de type silicone ou émulsion d'huile silicone.

Le dépôt de bore et de silicium peut aussi être réalisé de manière simultanée en utilisant par exemple une solution contenant un sel de bore et un composé du silicium de type silicone. Ainsi, par exemple dans le cas où le précurseur est un catalyseur de type nickel-tungstène supporté sur alumine-silice, il est possible d'imprégner ce précurseur par de la solution aqueuse de biborate d'ammonium et de silicone Rhodorsil EIP de la société Rhodia de procéder à un séchage par exemple à 120°C, puis d'imprégner par une solution de fluorure d'ammonium, de procéder à un séchage par exemple à 120°C, et de procéder à une calcination par exemple et de façon préférée sous air en lit traversé, par exemple à 500°C pendant 4 heures.

L'élément dopant choisi dans le groupe formé par le phosphore, le silicium et le bore ainsi que les éléments des groupes VIIB, VB, peuvent être introduits par une ou plusieurs opérations d'imprégnation avec excès de solution sur le précurseur calciné.

Lorsqu'au moins un élément dopant, P et éventuellement B et/ou Si, est introduit, sa répartition et sa localisation peuvent être déterminées par des techniques telles que la microsonde de Castaing (profil de répartition des divers éléments), la microscopie électronique par transmission couplée à une analyse X des composants du catalyseurs, ou bien encore par l'établissement d'une cartographie de répartition des éléments présents dans le catalyseur par microsonde électronique. Ces techniques permettent de mettre en évidence la présence de ces éléments exogènes ajoutés après la synthèse de l'alumine-silice selon l'invention.

Il est intéressant de préparer des catalyseurs présentant des concentrations homogènes $C_{Mo}$, $C_{Ni}$, $C_w$ et $C_P$ le long de l'extrudé. Il est également intéressant de préparer des catalyseurs présentant des concentrations $C_{Mo}$, $C_{Ni}$, $C_W$ et $C_P$ au coeur et en périphérie différente. Ces catalyseurs présentent des profils de répartition dits en « cuvette » ou en « dôme ». Un autre type de répartition est celle en croûte où les éléments de la phase active sont répartis en surface.

De façon générale, le rapport coeur/bord des concentrations $C_{Mo}$, $C_{Ni}$, $C_W$ et $C_P$ est compris entre 0.1 et 3. Dans une variante de l'invention, il est compris entre 0.8 et 1.2. Dans une autre variante de l'invention, le rapport coeur/bord des concentrations $C_P$ est compris entre 0.3 et 0.8.

La source de phosphore préférée est l'acide orthophosphorique $H_3PO_4$, mais ses sels et esters comme les phosphates d'ammonium conviennent également. Le phosphore peut par exemple être introduit sous la forme d'un mélange d'acide phosphorique et un composé organique basique contenant de l'azote tels que l'ammoniaque, les amines primaires et secondaires, les amines cycliques, les composés de la famille de la pyridine et des quinoléines et les composés de la famille du pyrrole. Les acides tungsto-phosphorique ou tungsto-molybdique peuvent être employés.

La teneur en phosphore est ajustée, sans que cela limite la portée de l'invention, de telle manière à former un composé mixte en solution et/ou sur le support par exemple tungstène - phosphore ou molybdène-tungstène-phosphore. Ces composés mites peuvent être des hétéropolyanions. Ces composés peuvent être des hétéropolyanions d'Anderson, par exemple. La teneur massique en phosphore calculée sous la forme $P_2O_5$ est comprise entre 0,6 et 2.5%.

La source de bore peut être l'acide borique, de préférence l'acide orthoborique $H_3BO_3$, le biborate ou le pentaborate d'ammonium, l'oxyde de bore, les esters boriques. Le bore peut par exemple être introduit sous la forme d'un mélange d'acide borique, d'eau oxygénée et un composé organique basique contenant de l'azote tels que l'ammoniaque, les amines primaires et secondaires, les amines cycliques, les composés de la famille de la pyridine et des quinoléines et les composés de la famille du pyrrole. Le bore peut être introduit par exemple par une solution d'acide borique dans un mélange eau/alcool.

De nombreuses sources de silicium peuvent être employées. Ainsi, on peut utiliser l'orthosilicate d'éthyle Si $(OEt)_4$, les siloxanes, les polysiloxanes, les silicones, les émulsions de silicones, les silicates d'halogénures comme le fluorosilicate d'ammonium $(NH_4)_2SiF_6$ ou le fluorosilicate de sodium $Na_2SiF_6$. L'acide silicomolybdique et ses sels, l'acide silicotungstique et ses sels peuvent également être avantageusement employés. Le silicium peut être ajouté par exemple par imprégnation de silicate d'éthyle en solution dans un mélange eau/alcool. Le silicium peut être ajouté par exemple par imprégnation d'un composé du silicium de type silicone ou l'acide silicique mis en suspension dans l'eau.

Les métaux du groupe VIB et du groupe VIII du catalyseur de la présente invention peuvent être présents en totalité ou partiellement sous forme métallique et/ou oxyde et/ou sulfure.

Par exemple, parmi les sources de molybdène et de tungstène, on peut utiliser les oxydes et hydroxydes, les acides molybdiques et tungstiques et leurs sels en particulier les sels d'ammonium tels que le molybdate d'ammonium, l'heptamolybdate d'ammonium, le tungstate d'ammonium, l'acide phosphomolybdique, l'acide phosphotungstique et leurs sels, l'acide silicomolybdique, l'acide silicotungstique et leurs sels.

Les sources d'éléments du groupe VIII qui peuvent être utilisées sont bien connues de l'homme du métier. Par exemple, pour les métaux non nobles on utilisera les nitrates, les sulfates, les hydroxydes, les phosphates, les halogénures par exemple, chlorures, bromures et fluorures, les carboxylates par exemple acétates et carbonates. Pour les métaux nobles on utilisera les halogénures, par exemple les chlorures, les nitrates, les acides tels que l'acide chloroplatinique, les oxychlorures tels que l'oxychlorure ammoniacal de ruthénium.

De préférence, on n'ajoute pas d'halogènes autres que celui introduit à l'imprégnation, cet halogène étant de préférence le chlore.

<u>Préparation du support</u>

Le support peut être constitué d'alumine-silice pure ou résulte du mélange avec ladite alumine-silice d'un liant tel que la silice ($SiO_2$), l'alumine ($Al_2O_3$), les argiles, l'oxyde de titane ($TiO_2$), l'oxyde de bore ($B_2O_3$) et la zircone ($ZrO_2$ et tout mélange des liants précédemment cités. Les liants préférés sont la silice et l'alumine et de manière encore plus préférée l'alumine sous toutes ces formes connues de l'homme du métier, par exemple l'alumine gamma. La teneur pondérale en liant dans le support du catalyseur est comprise entre 0 et 40%, plus particulièrement entre 1 et 40% et de manière encore plus préférée entre 5% et 20%. Cependant, les catalyseurs selon l'invention dont le support est constitué uniquement d'alumine-silice sans aucun liant sont préférés.

Le support peut être préparé par mise en forme de l'alumine-silice en présence ou en absence de liant par toute technique connue de l'homme du métier.

Dans l'ensemble des méthodes précitées, il peut être éventuellement souhaitable d'ajouter, lors d'une étape quelconque de la préparation, une proportion mineure d'au moins un élément promoteur choisi dans le groupe formé par la zircone et le titane.

<u>Mise en forme des supports et catalyseurs</u>

Le support peut être obtenu par mise en forme de l'alumine-silice par toute technique connue de l'homme du métier. La mise en forme peut être réalisée par exemple par extrusion, par pastillage, par la méthode de la coagulation en goutte (oil-drop), par granulation au plateau tournant ou par toute autre méthode bien connue de l'homme du métier. La mise en forme peut également être réalisée en présence des différents constituants du catalyseur et extrusion de la pâte minérale obtenue, par pastillage, mise en forme sous forme de billes au drageoir tournant ou au tambour, coagulation en goutte, oil-drop, oil-up, ou tout autre procédé connu d'agglomération d'une poudre contenant de l'alumine et éventuellement d'autres ingrédients choisis parmi ceux mentionnés ci-dessus.

Les catalyseurs utilisés selon l'invention ont la forme de sphères ou d'extrudés. Il est toutefois avantageux que le catalyseur se présente sous forme d'extrudés d'un diamètre compris entre 0,5 et 5 mm et plus particulièrement entre 0,7 et 2,5 mm. Les formes sont cylindriques (qui peuvent être creuses ou non), cylindriques torsadés, multilobées (2, 3, 4 ou 5 lobes par exemple), anneaux. La forme cylindrique est utilisée de manière préférée, mais toute autre forme peut être utilisée.

Par ailleurs, ces supports mis en oeuvre selon la présente invention peuvent avoir été traités ainsi qu'il est bien connu de l'homme de l'art par des additifs pour faciliter la mise en forme et/ou améliorer les propriétés mécaniques finales des supports alumino-silicates. A titre d'exemple d'additifs, on peut citer notamment la cellulose, la carboxyméthylcellulose, la carboxy-ethyl-cellulose, du tall-oil, les gommes xanthaniques, des agents tensio-actifs, des agents floculants comme les polyacrylamides, le noir de carbone, les amidons, l'acide stéarique, l'alcool polyacrylique, l'alcool polyvinylique, des biopolymères, le glucose, les polyéthylènes glycols, etc.

Le réglage de la porosité caractéristiques des supports de l'invention est opéré partiellement lors de cette étape de mise en forme des particules de supports.

La mise en forme peut être réalisée en utilisant les techniques de mise en forme des catalyseurs, connues de l'homme de l'art, telles que par exemple: extrusion, dragéification, séchage par atomisation ou encore pastillage.

On peut ajouter ou retirer de l'eau pour ajuster la viscosité de la pâte à extruder. Cette étape peut être réalisée à tout stade de l'étape de malaxage. Dans le cas de supports alumino-silicates, il peut être avantageux de diminuer la quantité d'eau de la pâte afin d'accroître la puissance mécanique fournie à la pâte. Cette action se traduit généralement par une diminution du volume total pour une teneur en acide optimale.

Pour ajuster la teneur en matière solide de la pâte à extruder afin de la rendre extrudable, on peut également ajouter un composé majoritairement solide et de préférence un oxyde ou un hydrate. On utilisera de manière préférée un hydrate et de manière encore plus préférée un hydrate d'aluminium. La perte au feu de cet hydrate sera supérieure à 15%.

La teneur en acide ajouté au malaxage avant la mise en forme est inférieure à 30%, de préférence comprise entre 0,5 et 20% poids de la masse anhydre en silice et alumine engagée dans la synthèse.

L'extrusion peut être réalisée par n'importe quel outil conventionnel, disponible commercialement. La pâte issue du malaxage est extrudée à travers une filière, par exemple à l'aide d'un piston ou d'une mono-vis ou double vis d'extrusion. Cette étape d'extrusion peut être réalisée par toute méthode connue de l'homme de métier.

Les extrudés de support selon l'invention ont généralement une résistance à l'écrasement d'au moins 70 N/cm et de manière préférée supérieure ou égale à 100 N/cm.

Calcination du support

Le séchage est effectué par toute technique connue de l'homme du métier.

Pour obtenir le support de la présente invention, il est préférable de calciner de préférence en présence d'oxygène moléculaire, par exemple en effectuant un balayage d'air, à une température inférieure ou égale à 1100°C. Au moins une calcination peut être effectuée après l'une quelconque des étapes de la préparation. Ce traitement par exemple peut être effectué en lit traversé, en lit léché ou en atmosphère statique. Par exemple, le four utilisé peut être un four rotatif tournant ou être un four vertical à couches traversées radiales. Les conditions de calcination: température et durée dépendent principalement de la température maximale d'utilisation du catalyseur. Les conditions préférées de calcination se situant entre plus d'une heure à 200°C à moins d'une heure à 1100°C. La calcination peut être opérée en présence de vapeur d'eau. La calcination finale peut être éventuellement effectuée en présence d'une vapeur acide ou basique. Par exemple, la calcination peut être réalisée sous pression partielle d'ammoniaque.

Traitements post-synthèse

Des traitements post-synthèse peuvent être effectués, de manière à améliorer les propriétés du support, notamment son homogénéité telle que définie précédemment.

Selon un mode de réalisation préféré, le traitement post-synthèse est un traitement hydrothermal. Le traitement hydrothermal est effectué par toute technique connue de l'homme du métier. Par traitement hydrothermal, on entend mise en contact à n'importe quel étape de l'élaboration du support mixte avec de l'eau en phase vapeur ou en phase liquide.

Par traitement hydrothermal, on peut entendre notamment mûrissement, steaming (traitement à la vapeur), autoclavage, calcination sous air humide, réhydratation. Sans que cela réduise la portée de l'invention, un tel traitement a pour effet de rendre mobile le composant silice.

Selon l'invention, le mûrissement peut avoir lieu avant ou après la mise en forme. Selon un mode préféré de l'invention, le traitement hydrothermal se fait par steaming (traitement à la vapeur) dans un four en présence de vapeur d'eau. La température pendant le steaming (traitement à la vapeur) peut être comprise entre 600 et 1100 °C et de préférence supérieure à 700°C pendant une période de temps comprise entre 30 minutes et 3 heures. La teneur en vapeur d'eau est supérieure à 20 g d'eau par kg d'air sec et de préférence supérieure à 40 g d'eau par kg d'air sec et de manière préférée supérieure à 100 g d'eau par kg d'air sec. Un tel traitement peut, le cas échéant, remplacer totalement ou en partie le traitement de calcination.

Le support peut ainsi être avantageusement soumis à un traitement hydrothermal en atmosphère confinée. On entend par traitement hydrothermal en atmosphère confinée un traitement par passage à l'autoclave en présence d'eau sous une température supérieure à la température ambiante.

Au cours de ce traitement hydrothermal, on peut traiter de différentes manières l'alumine-silice mise en forme. Ainsi, on peut imprégner l'alumine silice d'acide, préalablement à son passage à l'autoclave, l'autoclavage de l'alumine-silice étant fait soit en phase vapeur, soit en phase liquide, cette phase vapeur ou liquide de l'autoclave pouvant être acide ou non. Cette imprégnation, préalable à l'autoclavage, peut être acide ou non. Cette imprégnation, préalable à l'autoclavage peut être effectuée à sec ou par immersion de l'alumine-silice dans une solution aqueuse acide. Par imprégnation à sec, on entend mise en contact de l'alumine avec un volume de solution inférieur ou égal au volume poreux total de l'alumine traitée. De préférence, l'imprégnation est réalisée à sec.

L'autoclave est de préférence un autoclave à panier rotatif tel que celui défini dans la demande brevet EP-A-0 387 109.

La température pendant l'autoclavage peut être comprise entre 100 et 250°C pendant une période de temps comprise entre 30 minutes et 3 heures.

*Procédés de traitement de charges hydrocarbonées selon l'invention*

De façon générale, les catalyseurs selon l'invention sont utilisés pour le traitement des coupes hydrocarbonées, généralement en présence d'hydrogène, à une température supérieure à 200°C, sous une pression supérieure à 1 MPa, la vitesse spatiale étant comprise entre 0,1 et 20h$^{-1}$ et la quantité d'hydrogène introduite est telle que le rapport volumique litre d'hydrogène / litre d'hydrocarbure soit compris entre 80 et 5000 1/1.

Les catalyseurs selon l'invention sont utilisés avantageusement pour l'hydrocraquage/hydroconversion de coupes hydrocarbonées.

Les catalyseurs selon l'invention peuvent aussi être utilisés pour l'hydrotraitement de charges hydrocarbonées, seuls ou en amont d'un procédé d'hydrocraquage/hydroconversion sur un catalyseur d'hydrocraquage à base de zéolite ou d'alumine-silice, comprenant de préférence du nickel et du tungstène.

Sulfuration des catalyseurs

Préalablement à l'injection de la charge, les catalyseurs utilisés dans le procédé selon la présente invention sont de préférence soumis à un traitement de sulfuration permettant de transformer, au moins en partie, les espèces métalliques en sulfure avant leur mise en contact avec la charge à traiter. Ce traitement d'activation par sulfuration est bien connu de l'Homme du métier et peut être effectué par toute méthode déjà décrite dans la littérature soit in-situ, c'est-à-dire dans le réacteur, soit ex-situ.

Une méthode de sulfuration classique bien connue de l'homme du métier consiste à chauffer en présence d'hydrogène sulfuré (pur ou par exemple sous flux d'un mélange hydrogène/hydrogène sulfuré) à une température comprise entre 150 et 800°C, de préférence entre 250 et 600°C, généralement dans une zone réactionnelle à lit traversé.

Charges

Des charges très variées peuvent être traitées par les procédés selon l'invention décrits ci-dessus et généralement elles contiennent au moins 20% volume et souvent au moins 80% volume de composés bouillant au-dessus de 340°C.

La charge peut être par exemple des LCO (light cycle oil (gazoles légers issus d'une unité de craquage catalytique)), des distillats atmosphériques, des distillats sous vide par exemple gasoils issus de la distillation directe du brut ou d'unités de conversion telles que le FCC, le coker ou la viscoréduction, ainsi que des charges provenant d'unités d'extraction d'aromatiques des bases d'huile lubrifiante ou issues du déparaffinage au solvant des bases d'huile lubrifiante, ou encore des distillats provenant de procédés de désulfuration ou d'hydroconversion en lit fixe ou en lit bouillonnant de RAT (résidus atmosphériques) et/ou de RSV (résidus sous vide) et/ou d'huiles désasphaltées , ou encore la charge peut être une huile désasphaltée, ou encore tout mélange des charges précédemment citées. La liste ci-dessus n'est pas limitative. Les paraffines issues du procédé Fischer-Tropsch sont exclues. En général, les charges ont un point d'ébullition T5 supérieur à 340°C, et mieux encore supérieur à 370°C, c'est à dire que 95% des composés présents dans la charge ont un point d'ébullition supérieur à 340°C, et mieux encore supérieur à 370°C.

La teneur en azote des charges traitées dans les procédés selon l'invention est usuellement supérieure à 500 ppm, de préférence comprise entre 500 et 10000 ppm poids, de manière plus préférée entre 700 et 4000 ppin poids et de manière encore plus préférée entre 1000 et 4000 ppm. La teneur en soufre des charges traitées dans les procédés selon l'invention est usuellement comprise entre 0,01 et 5% poids, de manière préférée comprise entre 0,2 et 4% et de manière encore plus préférée entre 0.5 et 2 %.

La charge peut éventuellement contenir des métaux. La teneur cumulée en nickel et vanadium des charges traitées dans les procédés selon l'invention est de préférence inférieure à 1 ppm poids.

La teneur en asphaltènes est généralement inférieure à 3000 ppm, de manière préférée inférieure à 1000 ppm, de manière encore plus préférée inférieure à 200 ppm.

Lits de garde :

Dans le cas où la charge contient des composés de type résines et/ou asphaltènes, il est avantageux de faire passer au préalable la charge sur un lit de catalyseur ou d'adsorbant différent du catalyseur d'hydrocraquage ou d'hydrotraitement.

Les catalyseurs ou lits de garde utilisés selon l'invention ont la forme de sphères ou d'extrudés. Il est toutefois avantageux que le catalyseur se présente sous forme d'extrudés d'un diamètre compris entre 0,5 et 5 mm et plus particulièrement entre 0,7 et 2,5 mm. Les formes sont cylindriques (qui peuvent être creuses ou non), cylindriques torsadés, multilobées (2, 3, 4 ou 5 lobes par exemple), anneaux. La forme cylindrique est utilisée de manière préférée, mais toute autre forme peut être utilisée.

Afin de remédier à la présence de contaminants et ou de poisons dans la charge, les catalyseurs de garde peuvent, dans un autre de mode de réalisation préféré, avoir des formes géométriques plus particulières afin d'augmenter leur fraction de vide. La fraction de vide de ces catalyseurs est comprise entre 0.2 et 0.75. Leur diamètre extérieur peut varier entre 1 et 35 mm. Parmi les formes particulières possibles sans que cette liste soit limitative : les cylindres creux, les anneaux creux, les anneaux de Raschig, les cylindres creux dentelés, les cylindres creux crénelés, les roues de charrettes pentaring, les cylindres à multiples trous... Ces catalyseurs peuvent avoir été imprégnées par une phase active ou non. De manière préférée, les catalyseurs sont imprégnés par une phase hydro-déshydrogénante. De manière très préférée, la phase CoMo ou NiMo est utilisée.

Ces catalyseurs peuvent présenter de la macroporosité. Les lits de garde peuvent être commercialisés par Norton-Saint-Gobain, par exemple les lits de guarde MacroTrap®. Les lits de garde peuvent être commercialisés par Axens dans la famille ACT: ACT077, ACT935, ACT961 ou HMC841, HMC845, HMC941 ou HMC945.

Il peut particulièrement avantageux de superposer ces catalyseurs dans au moins deux lits différents de hauteurs variable. Les catalyseurs ayant le plus fort taux de vide sont de préférence utilisés dans le ou les premiers lits catalytiques en entrée de réacteur catalytique. Il peut également être avantageux d'utiliser au moins deux réacteurs différents pour ces catalyseurs.

Les lits de garde préférés selon l'invention sont les HMC et l'ACT961.

Conditions opératoires

Les conditions opératoires telles que température, pression, taux de recyclage d'hydrogène, vitesse spatiale horaire, pourront être très variables en fonction de la nature de la charge, de la qualité des produits désirés et des installations dont dispose le raffineur. Le catalyseur d'hydrocraquage/hydroconversion ou hydrotraitement est généralement mis en contact, en présence d'hydrogène, avec les charges décrites précédemment, à une température supérieure à 200°C, souvent comprise entre 250 et 480°C, avantageusement comprise entre 320 et 450°C, de préférence entre 330 et 435°C, sous une pression supérieure à 1 MPa, souvent comprise entre 2 et 25 MPa, de manière préférée entre 3 et 20 MPa, la vitesse spatiale étant comprise entre 0,1 et 20h$^{-1}$ et de préférence 0,1-6h$^{-1}$, de préférence, 0,2-3h$^{-1}$, et la quantité d'hydrogène introduite est telle que le rapport volumique litre d'hydrogène / litre d'hydrocarbure soit compris entre 80 et 5000l/l et le plus souvent entre 100 et 2000l/l.

Ces conditions opératoires utilisées dans les procédés selon l'invention permettent généralement d'atteindre des conversions par passe, en produits ayant des points d'ébullition inférieurs à 340°C, et mieux inférieurs à 370°C, supérieures à 15% et de manière encore plus préférée comprises entre 20 et 95%.

Modes de réalisation

Les procédés d'hydrocraquage/hydroconversion mettant en oeuvre les catalyseurs selon l'invention couvrent les domaines de pression et de conversion allant de l'hydrocraquage doux à l'hydrocraquage haute pression. On entend par hydrocraquage doux, un hydrocraquage conduisant à des conversions modérées, généralement inférieures à 40%, et fonctionnant à basse pression, généralement entre 2 MPa et 6 MPa.

Les conditions typiques du procédé et les conditions opératoires d'hydrocraquage conventionnel et haute pression peuvent être utilisées et ceci sans pour autant limiter la portée de l'invention. En fonction des objectifs retenus en terme de qualité de produit et du niveau de conversion, on peut ainsi distinguer deux grands types de procédé dont les principales caractéristiques sont dans le tableau ci-dessous.

| | Hydrocraquage doux | Hydrocraquage conventionnel Haute pression |
|---|---|---|
| Procédé | Une étape | Une ou deux étapes |
| Conversion wt % | 20-40 | 70-100 |
| Temp.°C | 350-430 | 350-430 |
| H2, pression, MPa | 3-8 | 10-20 |
| LHSV, h-1 | 0.3-1.5 | 0.2-2.0 |
| H2/charge Nm$^3$/m$^3$ | 300-1000 | 800-2000 |

Le procédé d'hydrocraquage doux est un procédé d'hydrotraitement amélioré permettant une conversion relativement basse (entre 20 et 40%) et opérant à basse pression (environ 6 voire 8 MPa de pression totale). Le procédé d'hydrocraquage haute pression permet une conversion élevée (70-100% masse) des distillats sous vide à haute pression (10-20 MPa).

Le catalyseur de la présente invention peut être utilisé seul, en un seul ou plusieurs lits catalytiques en lit fixe, dans un ou plusieurs réacteurs, dans un schéma d'hydrocraquage dit en une étape, avec ou sans recyclage liquide de la fraction non convertie, éventuellement en association avec un catalyseur d'hydroraffinage situé en amont du catalyseur de la présente invention.

Le catalyseur de la présente invention peut être utilisé seul, dans un seul ou plusieurs réacteurs en lit bouillonnant, dans un schéma d'hydrocraquage dit en une étape, avec ou sans recyclage liquide de la fraction non convertie, éventuellement en association avec un catalyseur d'hydroraffinage situé dans un réacteur en lit fixe ou en lit bouillonnant en amont du catalyseur de la présente invention.

Le lit bouillonnant s'opère avec retrait de catalyseur usé et ajout journalier de catalyseur neuf afin de conserver une activité du catalyseur stable.

Dans un schéma d'hydrocraquage dit en deux étapes avec séparation intermédiaire entre les deux zones réactionnelles, dans une étape donnée, le catalyseur de la présente invention peut-être utilisé dans l'un ou dans les deux réacteurs en association ou non avec un catalyseur d'hydroraffinage situé en amont du catalyseur de la présente invention.

### Procédé dit en une étape

L'hydrocraquage dit en une étape, comporte en premier lieu et de façon générale un hydroraffinage poussé qui a pour but de réaliser une hydrodéazotation et une désulfuration poussées de la charge avant que celle-ci ne soit envoyée sur le catalyseur d'hydrocraquage proprement dit, en particulier dans le cas où celui-ci comporte une zéolithe. Cet hydroraffinage poussé de la charge n'entraîne qu'une conversion limitée de la charge, en fractions plus légères, qui reste insuffisante et doit donc être complétée sur le catalyseur d'hydrocraquage plus actif. Cependant, il est à noter qu'aucune séparation n'intervient entre les deux types de catalyseurs. La totalité de l'effluent en sortie de réacteur est injectée sur le catalyseur d'hydrocraquage proprement dit et ce n'est qu'ensuite qu'une séparation des produits formés est réalisée. Cette version de l'hydrocraquage, encore appelée "Once Through", possède une variante qui présente un recyclage de la fraction non convertie vers le réacteur en vue d'une conversion plus poussée de la charge.

### Procédé dit en une étape en lit fixe

Dans le cas où le catalyseur selon la présente invention est utilisé en amont d'un catalyseur zéolithique d'hydrocraquage, par exemple à base de zéolithe Y, on utilisera avantageusement un catalyseur présentant une forte teneur pondérale en silice, c'est à dire avec des teneurs pondérales en silice du support entrant dans la composition du catalyseur comprises entre 20 et 80% et de préférence entre 30 et 60%. Il pourra aussi être avantageusement utilisé en association avec un catalyseur d'hydroraffinage, ce dernier étant situé en amont du catalyseur de la présente invention.

Lorsque le catalyseur selon la présente invention est utilisé en amont d'un catalyseur d'hydrocraquage à base d'alumine-silice ou à base de zéolithe, dans le même réacteur dans des lits catalytiques distincts ou dans des réacteurs distincts, la conversion est généralement (ou de préférence) inférieure à 50% poids et de manière préférée inférieure à 40%.

Le catalyseur selon l'invention peut être utilisé en amont ou en aval du catalyseur zéolithique. En aval du catalyseur zéolithique, il permet de craquer les HPA. Par HPA, on entend les hydrocarbures polyaromatiques tels que décrits notamment dans l'ouvrage "Hydrocracking, Science and Technology" de J.Scherzer, Editions M.Dekker Incorporated, 1996.

### Procédé dit en une étape en lit bouillonnant

Le catalyseur selon l'invention peut être utilisé seul dans un ou plusieurs réacteurs.

Dans le cadre d'un tel procédé, on pourra utiliser avantageusement plusieurs réacteurs en série, le ou les réacteurs en lit bouillonnant contenant le catalyseur selon l'invention étant précédé d'un ou plusieurs réacteurs contenant au moins un catalyseur d'hydroraffinage en lit fixe ou en lit bouillonnant.

Lorsque le catalyseur selon la présente invention est utilisé en aval d'un catalyseur d'hydroraffinage, la conversion de la fraction de la charge occasionnée par ce catalyseur d'hydroraffinage est généralement (ou de préférence) inférieure à 30% poids et de manière préférée inférieure à 25%.

### Procédé dit en une étape en lit fixe avec séparation intermédiaire

Le catalyseur selon la présente invention peut aussi être utilisé dans un procédé d'hydrocraquage dit en une étape comportant une zone d'hydroraffinage, une zone permettant l'élimination partielle de l'ammoniac, par exemple par un flash chaud, et une zone comportant un catalyseur d'hydrocraquage. Ce procédé d'hydrocraquage de charges hydrocarbonées en une étape pour la production de distillats moyens et éventuellement de bases huiles comporte au moins une première zone réactionnelle incluant un hydroraffinage, et au moins une deuxième zone réactionnelle, dans laquelle est opéré l'hydrocraquage d'au moins une partie de l'effluent de la première zone réactionnelle. Ce procédé comporte également une séparation incomplète de l'ammoniac de l'effluent sortant de la première zone. Cette séparation est avantageusement effectuée au moyen d'un flash chaud intermédiaire. L'hydrocraquage opéré en deuxième zone réactionnelle est réalisé en présence d'ammoniac en quantité inférieure à la quantité présente dans la charge, de préférence inférieure à 1500 ppm poids, de manière plus préférée inférieure à 1000 ppm poids et de manière encore plus préférée inférieure à 800 ppm poids d'azote. Le catalyseur de la présente invention est utilisé de préférence dans la zone réactionnelle d'hydrocraquage en association ou non avec un catalyseur d'hydroraffinage situé en amont du catalyseur de la présente invention. Le catalyseur selon l'invention peut être utilisé en amont ou en aval du catalyseur zéolithique. En aval du catalyseur zéolithique, il permet notamment de convertir les HPA ou les précurseurs de HPA.

Le catalyseur selon l'invention peut être utilisé soit dans la première zone réactionnelle en prétraitement convertissant, seul ou en association avec un catalyseur d'hydroraffinage classique, situé en amont du catalyseur selon l'invention, dans un ou plusieurs lits catalytiques, dans un ou plusieurs réacteurs.

Procédé d'hydrocraquage dit en une étapes avec hydroraffinage préliminaire sur catalyseur d'acidité faible.

- Le catalyseur selon l'invention peut être utilisé dans un procédé d'hydrocraquage comprenant:
- une première zone réactionnelle d'hydroraffinage dans laquelle la charge est mise en contact avec au moins un catalyseur d'hydroraffinage présentant dans le test standard d'activité un taux de conversion du cyclohexane inférieur à 10 % massique.
- une deuxième zone réactionnelle d'hydrocraquage dans laquelle une partie au moins de l'effluent issu de l'étape d'hydroraffinage est mise en contact avec au moins un catalyseur d'hydrocraquage zéolithique présentant dans le test standard d'activité un taux de conversion du cyclohexane supérieur à 10 % massique, le catalyseur selon l'invention étant présent dans au moins une des deux zones réactionnelles.

La proportion du volume catalytique de catalyseur d'hydroraffinage représente généralement 20 à 45% du volume catalytique total.

L'effluent issu de la première zone réactionnelle est au moins en partie, de préférence en totalité, introduit dans la deuxième zone réactionnelle dudit procédé. Une séparation intermédiaire des gaz peut être réalisée comme décrite précédemment.

L'effluent en sortie de deuxième zone réactionnelle est soumis à une séparation dite finale (par exemple par distillation atmosphérique éventuellement suivie d'une distillation sous vide), de manière à séparer les gaz. Il est obtenu au moins une fraction liquide résiduelle, contenant essentiellement des produits dont le point d'ébullition est généralement supérieur à 340°C, qui peut être au moins en partie recyclée en amont de la deuxième zone réactionnelle du procédé selon l'invention, et de préférence en amont du catalyseur d'hydrocraquage à bas d'alumine-silice, dans un objectif de production de distillats moyens.

La conversion en produits ayant des points d'ébullition inférieurs à 340°C, ou encore inférieurs à 370°C est d'au moins 50% poids.

Procédé dit en deux étapes

L'hydrocraquage en deux étapes, comporte une première étape qui a pour objectif, comme dans le procédé "une étape", de réaliser l'hydroraffinage de la charge, mais aussi d'atteindre une conversion de cette dernière de l'ordre en général de 40 à 60%. L'effluent issu de la première étape subit ensuite une séparation (distillation) appelée le plus souvent séparation intermédiaire, qui a pour objectif de séparer les produits de conversion de la fraction non convertie. Dans la deuxième étape d'un procédé d'hydrocraquage en deux étapes, seule la fraction de la charge non convertie lors de la première étape, est traitée. Cette séparation permet à un procédé d'hydrocraquage deux étapes d'être plus sélectif en distillat moyen (kérosène + diesel) qu'un procédé en une étape. En effet, la séparation intermédiaire des produits de conversion évite leur "sur-craquage" en naphta et gaz dans la deuxième étape sur le catalyseur d'hydrocraquage. Par ailleurs, il est à noter que la fraction non convertie de la charge traitée dans la deuxième étape contient en général de très faibles teneurs en $NH_3$ ainsi qu'en composés azotés organiques, en général moins de 20 ppm poids voire moins de 10 ppm poids:

La même configuration de lits catalytiques en lit fixe ou en lit bouillonnant peut être utilisée dans la première étape d'un schéma dit en deux étapes, que le catalyseur soit utilisé seul ou en association avec un catalyseur d'hydroraffinage classique. Le catalyseur selon l'invention peut être utilisé en amont ou en aval du catalyseur zéolithique. En aval du catalyseur zéolithique, il permet notamment de convertir les HPA ou les précurseurs de HPA.

Pour les procédés dits en une étape et pour la première étape des procédés d'hydrocraquage en deux étapes, les catalyseurs préférés selon l'invention sont les catalyseurs dopés à base d'éléments du groupe VIII non nobles, de manière encore plus préférée les catalyseurs à base de nickel et de tungstène et l'élément dopant préféré étant le phosphore.

Les catalyseurs utilisés dans la deuxième étape des procédés d'hydrocraquage en deux étapes sont de préférence les catalyseurs dopés à base d'éléments nobles du groupe VIII, de manière encore plus préférée les catalyseurs à base de platine et/ou de palladium et l'élément dopant préféré étant le phosphore.

Les exemples suivants illustrent la présente invention sans toutefois en limiter la portée.

Exemples

Exemple 1 : Préparation du catalyseur Cl non conforme

Le support A est une alumine-silice qui a une composition chimique en poids de 60% de $Al_2O_3$ et 40% de $SiO_2$. Son rapport Si/Al est de 0.6. Sa teneur en sodium est de l'ordre de 100-120 ppm en poids. Les extrudés sont cylindriques de diamètre 1.6 mm. Sa surface spécifique est de 320 $m^2$/g. Son volume poreux total, mesuré par porosimétrie au mercure est 0.81 $cm^3$/g. La distribution poreuse est bimodale. Dans le domaine des mésopores, un large pic entre 4 et 15 nm avec un maximum à 7 nm est observé dans la distribution poreuse dV/dD et le diamètre moyen des pores déterminé à partir de la porosimétrie mercure est de 105 A. Le volume des mésopores avec un diamètre compris entre 40 et 150 Å est de 0.48 $cm^3$/g et ce volume représente environ 59 % du volume poreux total. Le volume des macropores du support, dont le diamètre est plus grand que 500Å, est de 0.26 $cm^3$/g et ce volume représente environ 32 % du volume poreux total. Le volume des pores du support, dont le diamètre est plus grand que 250Å, est de 0.29 $cm^3$/g et ce volume représente environ 36 % du volume poreux total.

Le catalyseur C1 est obtenu par imprégnation à sec du support A, sous forme d'extrudés, dont les caractéristiques sont décrites ci-dessus, par une solution aqueuse renfermant des sels de tungstène et de nickel. Le sel de tungstène est le métatungstate d'ammonium $(NH_4)_6H_2W_{12}O_{40}*4H_2O$ et celui de nickel est le nitrate de nickel $Ni(NO_3)_2*6H_2O$. Après maturation à température ambiante dans une atmosphère saturée en eau, les extrudés imprégnés sont séchés à 120°C pendant une nuit puis calcinés à 500°C sous air sec. La teneur finale en NiO est de 3.5% en poids. La teneur finale en $WO_3$ est 25% en poids.

Exemple 2: Préparation du catalyseur C2 non conforme

Le catalyseur C2 est obtenu par imprégnation à sec du catalyseur C1 par une solution contenant du biborate d'ammonium $[(NH_4)_2B_4O_7*4H_2O]$ et une huile de silicone sous forme d'émulsion de Rhodorsil EP1 de Rhodia. Après maturation à température ambiante dans une atmosphère saturée en eau, les extrudés imprégnés sont séchés à 120°C pendant une nuit puis calcinés à 500°C sous air sec. La teneur finale en NiO est de 3.32% en poids. La teneur finale en $WO_3$ est 23.7% en poids. La teneur finale en $B_2O_3$ est de 3.2 % en poids. La teneur finale en $SiO_2$ ré-imprégné est de 2.1 % en poids.

Exemple 3: Préparation du catalyseur C3 non conforme

Le catalyseur C3 est obtenu par imprégnation à sec du catalyseur C1 par une solution contenant du biborate d'ammonium $[(NH_4)_2B_4O_7*4H_2O]$. Après maturation à température ambiante dans une atmosphère saturée en eau, les extrudés imprégnés sont séchés à 120°C pendant une nuit puis calcinés à 500°C sous air sec. La teneur finale en NiO est de 3.4% en poids. La teneur finale en $WO_3$ est 24.25% en poids. La teneur finale en $B_2O_3$ est de 3.2 % en poids.

Exemple 4: Préparation du catalyseur C4 non conforme

Le catalyseur C4 est obtenu par imprégnation à sec du catalyseur C1 par une huile de silicone sous forme émulsion Rhodorsil EP1 de Rhodia. Après maturation à température ambiante dans une atmosphère saturée en eau, les extrudés imprégnés sont séchés à 120°C pendant une nuit puis calcinés à 500°C sous air sec. La teneur finale en NiO est de 3.4% en poids. La teneur finale en $WO_3$ est 24.25% en poids. La teneur finale en $SiO_2$ ré-imprégné est de 2.0 % poids.

Exemple 5: Préparation du catalyseur C5 conforme

Le catalyseur C5 est obtenu par imprégnation à sec du support A, sous forme d'extrudés, dont les caractéristiques sont décrites ci-dessus, par une solution aqueuse renfermant des sels de tungstène et de nickel et d'acide phosphorique $H_3PO_4$. Le sel de tungstène est le métatungstate d'ammonium $(NH_4)_6H_2W_{12}O_{40}*4H_2O$ et celui de nickel est le nitrate de nickel $Ni(NO_3)_2*6H_2O$. Après maturation à température ambiante dans une atmosphère saturée en eau, les extrudés imprégnés sont séchés à 120°C pendant une nuit puis calcinés à 500°C sous air sec. La teneur finale en NiO est de 3.5% en poids. La teneur finale en $WO_3$ est 25% en poids. La teneur finale en $P_2O_5$ est de 1.9 % en poids.

Le volume poreux total du catalyseur, mesuré par porosimétrie au mercure, est de 0.45 ml/g. Le volume poreux des pores de diamètre supérieur à 500 Å du catalyseur, mesuré par porosimétrie au mercure, est de 0.10 ml/g. Le volume poreux des pores de diamètre supérieur à 250 Å du catalyseur, mesuré par porosimétrie au mercure, est de 0.13 m.l/g. La DRT est de 0.808 cm3/g.

Exemple 6: Préparation du catalyseur C6 conforme

Le catalyseur C6 est obtenu par imprégnation à sec du catalyseur C5 par une solution contenant du biborate d'ammonium [(NH$_4$)$_2$B$_4$O$_7$*4H$_2$O] et une huile de silicone sous forme émulsion Rhodorsil EP1 de Rhodia. Après maturation à température ambiante dans une atmosphère saturée en eau, les extrudés imprégnés sont séchés à 120°C pendant une nuit puis calcinés à 500°C sous air sec. La teneur finale en NiO est de 3.32% en poids. La teneur finale en WO$_3$ est 23.7 % en poids. La teneur finale en P$_2$O$_5$ est de 1.8 % en poids. La teneur finale en B$_2$O$_3$ est de 3.2 % en poids. La teneur finale en SiO$_2$ ré-imprégné est de 2.1 % poids. Le volume poreux total du catalyseur, mesuré par porosimétrie au mercure, est de 0.44 ml/g. Le volume poreux des pores de diamètre supérieur à 500 Å du catalyseur, mesuré par porosimétrie au mercure, est de 0.10 ml/g. Le volume poreux des pores de diamètre supérieur à 250 Å du catalyseur, mesuré par porosimétrie au mercure, est de 0.13 ml/g. La DRT est de 0.83 g/cm3.

Exemple 7: Préparation du catalyseur C7 conforme

Le catalyseur C7 est obtenu par imprégnation à sec du catalyseur C5 par une solution contenant du biborate d'ammonium [(NH4)ZB$_4$O$_7$*4H$_2$O]. Après maturation à température ambiante dans une atmosphère saturée en eau, les extrudés imprégnés sont séchés à 120°C pendant une nuit puis calcinés à 500°C sous air sec. La teneur finale en NiO est de 3.4% en poids. La teneur finale en WO$_3$ est 24.25% en poids. La teneur finale en P$_2$O$_5$ est de 1.84 % en poids. La teneur finale en B$_2$O$_3$ est de 3.2 % en poids. Le volume poreux total du catalyseur, mesuré par porosimétrie au mercure, est de 0.44 ml/g. Le volume poreux des pores de diamètre supérieur à 500 Å du catalyseur, mesuré par porosimétrie au mercure, est de 0.10 ml/g. Le volume poreux des pores de diamètre supérieur à 250 Å du catalyseur, mesuré par porosimétrie au mercure, est de 0.13 ml/g. La DRT est de 0.82 g/cm3.

Exemple 8 : Préparation du catalyseur C8 conforme

Le catalyseur C8 est obtenu par imprégnation à sec du catalyseur C5 par une huile de silicone sous forme émulsion Rhodorsil EP1 de Rhodia. Après maturation à température ambiante dans une atmosphère saturée en eau, les extrudés imprégnés sont séchés à 120°C pendant une nuit puis calcinés à 500°C sous air sec. La teneur finale en NiO est de 3.4% en poids. La teneur finale en WO$_3$ est 24% en poids. La teneur finale en P$_2$O$_5$ est de 1.82 % en poids. La teneur finale en SiO$_2$ ré-imprégné est de 2,1 % .Le volume poreux total du catalyseur, mesuré par porosimétrie au mercure, est de 0.44 ml/g. Le volume poreux des pores de diamètre supérieur à 500 Å du catalyseur, mesuré par porosimétrie au mercure, est de 0.10 ml/g. Le volume poreux des pores de diamètre supérieur à 250 Å du catalyseur, mesuré par porosimétrie au mercure, est de 0.13 ml/g. La DRT est de 0.81 g/cm3.

Exemple 9 : Préparation du catalyseur C9 non conforme

Le catalyseur C9 est obtenu par imprégnation à sec du support A, sous forme d'extrudés, dont les caractéristiques sont décrites ci-dessus, par une solution aqueuse renfermant des sels de tungstène et de nickel et d'acide phosphorique H$_3$PO$_4$. Le sel de tungstène est le métatungstate d'ammonium (NH$_4$)$_6$H$_2$W$_{12}$O$_{40}$*4H$_2$O et celui de nickel est le nitrate de nickel Ni(NO$_3$)$_2$*6H$_2$O. Après maturation à température ambiante dans une atmosphère saturée en eau, les extrudés imprégnés sont séchés à 120°C pendant une nuit puis calcinés à 500°C sous air sec. La teneur finale en WO$_3$ est 25% en poids. La teneur finale en NiO est de 3.5% en poids. La teneur en % P$_2$O$_5$ est 7 %.

Exemple 10 : Préparation du catalyseur C10 conforme

Le catalyseur C10 est obtenu par imprégnation à sec du support A, sous forme d'extrudés, dont les caractéristiques sont décrites ci-dessus par une solution aqueuse renfermant des sels de tungstène et de nickel et d'acide phosphorique H$_3$PO$_4$. Le sel de tungstène est le métatungstate d'ammonium (NH$_4$)$_6$H$_2$W$_{12}$O$_{40}$*4H$_2$O et celui de nickel est le nitrate de nickel Ni(NO$_3$)$_2$*6H$_2$O. Après maturation à température ambiante dans une atmosphère saturée en eau, les extrudés imprégnés sont séchés à 120°C pendant une nuit puis calcinés à 500°C sous air sec. La teneur finale en NiO est de 3.5% en poids. La teneur finale en WO$_3$ est 25% en poids. La teneur finale en P$_2$O$_5$ est de 0.6 % en poids. Le volume poreux total du catalyseur, mesuré par porosimétrie au mercure, est de 0.44 ml/g. Le volume poreux des pores de diamètre supérieur à 500 Å du catalyseur, mesuré par porosimétrie au mercure, est de 0.10 ml/g. Le volume poreux des pores de diamètre supérieur à 250 Å du catalyseur, mesuré par porosimétrie au mercure, est de 0.13 ml/g. La DRT est de 0.808 g/cm3.

Exemple 11 : Préparation du catalyseur C11 conforme

Le catalyseur C11 est obtenu par imprégnation à sec du support A, sous forme d'extrudés, dont les caractéristiques sont décrites ci-dessus par une solution aqueuse renfermant des sels de tungstène et de nickel et d'acide phosphorique $H_3PO_4$. Le sel de tungstène est le métatungstate d'ammonium $(NH_4)_6H_2W_{12}O_{40}*4H_2O$ et celui de nickel est le nitrate de nickel $Ni(NO_3)_2*6H_2O$. Après maturation à température ambiante dans une atmosphère saturée en eau, les extrudés imprégnés sont séchés à 120°C pendant une nuit puis calcinés à 500°C sous air sec. La teneur finale en NiO est de 3.5% en poids. La teneur finale en $WO_3$ est 25% en poids. La teneur finale en $P_2O_5$ est de 2.5 % en poids. Le volume poreux total du catalyseur, mesuré par porosimétrie au mercure, est de 0.45 ml/g. Le volume poreux des pores de diamètre supérieur à 500 Å du catalyseur, mesuré par porosimétrie au mercure, est de 0.10 ml/g. Le volume poreux des pores de diamètre supérieur à 250 Å du catalyseur, mesuré par porosimétrie au mercure, est de 0.13 ml/g. La DRT est de 0.81 g/cm3.

Exemple 12 : Préparation du catalyseur C12 non conforme

Le catalyseur C11 est obtenu par imprégnation à sec du support A, sous forme d'extrudés, dont les caractéristiques sont décrites ci-dessus par une solution aqueuse renfermant des sels de tungstène et de nickel et d'acide phosphorique $H_3PO_4$. Le sel de tungstène est le métatungstate d'ammonium $(NH_4)_6H_2W_{12}O_{40}*4H_2O$ et celui de nickel est le nitrate de nickel $Ni(NO_3)_2*6H_2O$. Après maturation à température ambiante dans une atmosphère saturée en eau, les extrudés imprégnés sont séchés à 120°C pendant une nuit puis calcinés à 500°C sous air sec. La teneur finale en NiO est de 3.5% en poids. La teneur finale en $WO_3$ est 25% en poids. La teneur finale en $P_2O_5$ est de 2.6 % en poids. Le volume poreux total du catalyseur, mesuré par porosimétrie au mercure, est de 0.46 ml/g. Le volume poreux des pores de diamètre supérieur à 500 Å du catalyseur, mesuré par porosimétrie au mercure, est de 0.10 ml/g. Le volume poreux des pores de diamètre supérieur à 250 Å du catalyseur, mesuré par porosimétrie au mercure, est de 0.13 ml/g. La DRT est de 0.83 g/cm3.

Exemple 13 : Préparation du catalyseur C13 non conforme

Le catalyseur C11 est obtenu par imprégnation à sec du support A, sous forme d'extrudés, dont les caractéristiques sont décrites ci-dessus par une solution aqueuse renfermant des sels de tungstène et de nickel et d'acide phosphorique $H_3PO_4$. Le sel de tungstène est le métatungstate d'ammonium $(NH_4)_6H_2W_{12}O_{40}*4H_2O$ et celui de nickel est le nitrate de nickel $Ni(NO_3)_2*6H_2O$. Après maturation à température ambiante dans une atmosphère saturée en eau, les extrudés imprégnés sont séchés à 120°C pendant une nuit puis calcinés à 500°C sous air sec. La teneur finale en NiO est de 3.5% en poids. La teneur finale en $WO_3$ est 25% en poids. La teneur finale en $P_2O_5$ est de 3.5 % en poids. Le volume poreux total du catalyseur, mesuré par porosimétrie au mercure, est de 0.44 ml/g. Le volume poreux des pores de diamètre supérieur à 500 Å du catalyseur, mesuré par porosimétrie au mercure, est de 0.10 ml/g. Le volume poreux des pores de diamètre supérieur à 250 Å du catalyseur, mesuré par porosimétrie au mercure, est de 0.13 ml/g. La DRT est de 0.83 g/cm3.

Exemple 14 : Préparation du catalyseur C14 conforme

Le support B est une alumine-silice qui a une composition chimique en poids de 70% de $Al_2O_3$ et 30% de $SiO_2$. Son rapport Si/Al est de 0.37. Sa teneur en sodium est de l'ordre de 100 ppm en poids. Les extrudés sont cylindriques de diamètre 1.6 mm. Sa surface spécifique est de 300 $m^2$/g. Son volume poreux total, mesuré par porosimétrie au mercure est 0.7 cm3/g. La distribution poreuse est bimodale. Dans le domaine des mésopores, un large pic entre 4 et 15 nm avec un maximum à 7 nm est observé dans la distribution poreuse dV/dD et le diamètre moyen des pores du support déterminé à partir de la porosimétrie mercure est de 90 Å. Le volume des mésopores avec un diamètre compris entre 40 et 150 A est de 0.51 $cm^3$/g et ce volume représente environ 72 % du volume poreux total. Le volume des macropores du support, dont le diamètre est plus grand que 500Å, est de 0.145 $cm^3$/g et représentent environ 20 % du volume poreux total. Le volume des pores du support, dont le diamètre est plus grand que 250Å, est de 0.17 $cm^3$/g et représente environ 24 % du volume poreux total.

Le catalyseur C14 est obtenu par imprégnation à sec du support B, sous forme d'extrudés, dont les caractéristiques sont décrites ci-dessus par une solution aqueuse renfermant des sels de tungstène et de nickel et d'acide phosphorique $H_3PO_4$. Le sel de tungstène est le métatungstate d'ammonium $(NH_4)_6H_2W_{12}O_{40}*4H_2O$ et celui de nickel est le nitrate de nickel $Ni(NO_3)_2*6H_2O$. Après maturation à température ambiante dans une atmosphère saturée en eau, les extrudés imprégnés sont séchés à 120°C pendant une nuit puis calcinés à 500°C sous air sec. La teneur finale en NiO est de 3.5% en poids. La teneur finale en WO$_3$ est 25% en poids La teneur finale en P$_2$O$_5$ est de 1.9 % en poids. Le volume poreux total du catalyseur, mesuré par porosimétrie au mercure, est de 0.44 ml/g. Le volume poreux des pores de diamètre supérieur à 500 Å du catalyseur, mesuré par porosimétrie au mercure, est de 0.10 ml/g. Le volume poreux des pores de diamètre supérieur à 250 Å du catalyseur, mesuré par porosimétrie au mercure, est de 0.13 ml/g. La DRT est de 0.82 g/cm3.

Exemple 15 : Préparation du catalyseur C15 conforme

Le support C est une alumine-silice qui a une composition chimique en poids de 81% de Al$_2$O$_3$ et 19% de SiO$_2$. Son rapport Si/Al est de 0.2. Sa teneur en sodium est de l'ordre de 100 ppm en poids. Les extrudés sont cylindriques de diamètre 1.6 mm. Sa surface spécifique est de 300 m2/g. Son volume poreux total, mesuré par porosimétrie au mercure est 0.61 cm$^3$/g. La distribution poreuse est bimodale. Dans le domaine des mésopores, un large pic entre 4 et 15 nm avec un maximum à 7 nm est observé dans la distribution poreuse dV/dD et le diamètre moyen des pores du support déterminé à partir de la porosimétrie mercure est de 85 Å. Le volume des mésopores avec un diamètre compris entre 40 et 150 Å est de 0.45 cm$^3$/g et ce volume représente environ 74 % du volume poreux total. Le volume des macropores du support, dont le diamètre est plus grand que 500A est de 0.10 cm3/g et ce volume représente environ 16 % du volume poreux total. Le volume des pores du support, dont le diamètre est plus grand que 250Å est de 0.13 cm$^3$/g et ce volume représente environ 21 % du volume poreux total.

Le catalyseur C15 est obtenu par imprégnation à sec du support C, sous forme d'extrudés, dont les caractéristiques sont décrites ci-dessus par une solution aqueuse renfermant des sels de tungstène et de nickel et d'acide phosphorique H$_3$PO$_4$. Le sel de tungstène est le métatungstate d'ammonium (NH$_4$)$_6$H$_2$W$_{12}$O$_{40}$*4H$_2$O et celui de nickel est le nitrate de nickel Ni(NO$_3$)$_2$*6H$_2$O. Après maturation à température ambiante dans une atmosphère saturée en eau, les extrudés imprégnés sont séchés à 120°C pendant une nuit puis calcinés à 500°C sous air sec. La teneur finale en NiO est de 3.5% en poids. La teneur finale en WO$_3$ est 25% en poids. La teneur finale en P$_2$O$_5$ est de 2 % en poids. Le volume poreux total du catalyseur, mesuré par porosimétrie au mercure, est de 0.4 ml/g. Le volume poreux des pores de diamètre supérieur à 500 Å du catalyseur, mesuré par porosimétrie au mercure, est de 0.10 ml/g. Le volume poreux des pores de diamètre supérieur à 250 Å du catalyseur, mesuré par porosimétrie au mercure, est de 0.13 ml/g. La DRT est de 0.82 g/cm3.

Les teneurs pondérales finales en WO$_3$, NiO, P$_2$O$_5$, SiO$_2$ et B$_2$O$_3$ des catalyseurs sont reportées dans le tableau 1 ci-dessous.

Tableau 1 : Teneurs pondérales en $WO_3$, $NiO$, $P_2O_5$, $SiO_2$ et $B_2O_3$ des catalyseurs C1 à C15

| | C1 | C2 | C3 | C4 | C5 | C6 | C7 | C8 |
|---|---|---|---|---|---|---|---|---|
| NiO (% poids) | 3,5 | 3,32 | 3,4 | 3,36 | 3,5 | 3,32 | 3,4 | 3,36 |
| WO$_3$ (% poids) | 25 | 23.7 | 24.25 | 24 | 25 | 23.7 | 24.25 | 24 |
| P$_2$O$_5$ (% poids) | 0 | 0 | 0 | 0 | 1,9 | 1,8 | 1.84 | 1.82 |
| B$_2$O$_3$ (% poids) | 0 | 3,2 | 3,2 | 0 | 0 | 3,2 | 3,2 | 0 |
| SiO$_2$ (% poids) déposé sur le support | 0 | 2,1 | 0 | 2,0 | 0 | 2,1 | 0 | 2,1 |

| | C9 | C10 | C11 | C12 | C13 | C14 | C15 |
|---|---|---|---|---|---|---|---|
| NiO (% poids) | 3,5 | 3,5 | 3,5 | 3,5 | 3,5 | 3,5 | 3,5 |
| WO$_3$ (% poids) | 25 | 25 | 25 | 25 | 25 | 25 | 25 |
| P$_2$O$_5$ (% poids) | 7 | 0.6 | 2.5 | 2.6 | 3.5 | 1.9 | 2 |
| B$_2$O$_3$ (% poids) | 0 | 0 | 0 | 0 | 0 | 0 | 0 |
| SiO$_2$ (% poids) déposé sur le support | 0 | 0 | 0 | 0 | 0 | 0 | 0 |

Exemple 16 : Evaluation des catalyseurs C1 à C15

Les catalyseurs C1 à C15 dont la préparation est décrite dans les exemples 1 à 15 sont utilisés pour réaliser l'hydrocraquage d'un distillat sous vide dont les principales caractéristiques sont données ci-après :

| | |
|---|---|
| Nature de la charge | Distillats sous vide |
| Densité à 20°C | 0.904 |
| Soufre % en poids | 2.2 |
| Azote ppm en poids | 620 |
| Distillation simulée | |
| DS : Point initial °C | 345 |
| DS : 05%p°C | 368 |
| DS : 10%p°C | 375 |
| DS : 50%p°C | 402 |
| DS : 90%p °C | 428 |
| DS : Point final °C | 467 |

Les catalyseurs C1 à C15 ont été mis en oeuvre selon le procédé de l'invention en utilisant une unité pilote comportant 1 réacteur à lit fixe traversé, les fluides circulent de bas en haut (up-flow).

Préalablement au test d'hydrocraquage, les catalyseurs sont sulfurés à 140 bars, à 350°C au moyen d'un gasoil de distillation directe additionné de 2% poids de DMDS.

Après sulfuration, les tests catalytiques ont été effectués dans les conditions suivantes :

Pression totale     14 MPa     T=400°C

La vitesse spatiale (VVH) est égale à 0,65 h-1.

Les performances catalytiques sont exprimées par la conversion nette en produits ayant un point d'ébullition inférieurs à 380°C, par la sélectivité nette en distillat moyen coupe 150-380°C et le rapport rendement Gasoil/rendement kérosène dans la fraction distillat moyen. Elles sont exprimées à partir des résultats de distillation simulée.

La conversion nette CN est prise égale à :

$$CN\ 380°C = [\ (\%\ de\ 380°C^-_{effluents}) - (\%\ de\ 380°C^-_{charge})\ ]\ /\ [\ 100 - (\%\ de\ 380°C^-_{charge})]$$

avec

% de 380°C⁻ effluents = teneur massique en composés ayant des points d'ébullition inférieurs à 380°C dans les effluents, et

% de 380°C⁻ charge = teneur massique en composés ayant des points d'ébullition inférieurs à 380°C dans la charge.

La sélectivité brute en distillat moyen SB est prise égale à :

$$SB\ définition = [(fraction\ en\ 150 - 380_{effluents})]\ /\ [(\%\ de\ 380°C^-_{effluents})]$$

Tableau 2 : Résultats catalytiques en hydrocraquage une étape et haute pression :

| Catalyseur | Température pour 80% de conversion nette | SB % poids Distillat moyen (DM) | Rapport Go./Ker. %poids / %poids |
|---|---|---|---|
| C1 | 398 | 69 | 1.50 |
| C2 (BSi) | 394 | 69 | 1.40 |
| C3 (B) | 396 | 69 | 1.45 |
| C4 (Si) | 396 | 69 | 1.47 |
| C5 (P) | 392 | 70.5 | 1.50 |
| C6 (PBSi) | 388 | 70.5 | 1.40 |
| C7 (PB) | 390 | 70.5 | 1.45 |
| C8 (PSi) | 390 | 70.5 | 1.47 |
| C9 (P) | 398 | 69 | 1.47 |
| C10 (P) | 392 | 70.5 | 1.50 |
| C11 (P) | 392 | 70.5 | 1.50 |
| C12 (P) | 394 | 69 | 1.45 |
| C13 (P) | 394 | 69 | 1.40 |
| C14 | 392 | 70.5 | 1.50 |
| C15 | 396 | 69 | 1.45 |

Mise en évidence de l'intérêt de l'utilisation du Phosphore en tant qu'élément dopant.:

Il est intéressant de noter que les catalyseurs C3 et C4, qui ne contiennent respectivement que du Bore et que du Silicium comme élément dopant, ont une sélectivité en distillats moyens plus faible que le catalyseur C5 ne contenant que du Phosphore comme élément dopant. De plus, dans la fraction distillats moyens, le rapport Gazole/Kerosène est plus faible que celui obtenu avec le catalyseur C5.

Par ailleurs, l'utilisation du catalyseur C2 mettant en oeuvre la combinaison de Bore et de Silicium met en évidence une réduction du rapport Gazole/Kérosène et donc une sélectivité en distillat moyens plus faible en gazole par rapport à un catalyseur contenant du Phosphore.

Ainsi, les résultats catalytiques indiquent que le catalyseur C5 supporté sur une alumine silice spécifique selon l'invention dont la formulation de la phase active contient une teneur ajustée en phosphore selon l'invention est très convertissant et principalement très sélectif en distillats moyens. De plus, dans la fraction distillats moyens, nous obtenons un rapport Gazole/Kerosène élevé. Le catalyseur C5 a donc une sélectivité en distillats moyens particulièrement élevée en gazole, une fraction particulièrement recherchée par les raffineurs. Les performances du catalyseur C5 sont liées à l'acidité particulière du catalyseur C5 qui est supporté sur une alumine silice particulière. L'utilisation de cette alumine silice en tant que support est donc particulièrement avantageuse pour obtenir des catalyseurs d'hydrocraquage très actifs qui sont très sélectifs en distillats moyens.

Il apparaît donc que l'utilisation du Phosphore en tant qu'élément dopant est préférable à l'utilisation du Bore, du Silicium ainsi qu'à l'utilisation de la combinaison Bore/Silicium.

Il doit être souligné que les catalyseurs C6, C7 et C8 obtenus à partir du catalyseur C5, respectivement par ajout de BSi, B et Si, ont des activités améliorées par rapport au catalyseur C5. La sélectivité en distillats moyens est identique. Pourtant, dans les catalyseurs C6, C7 et C8, nous observons que le rapport Gazole/Kérosène est légèrement différent de celle du catalyseur C5. Avec une augmentation de l'activité de ces catalyseurs, nous observons une réduction du rapport Gazole/Kérosène et donc une sélectivité en distillat moyens plus faible en gazole qui est la fraction recherchée par rapport à un catalyseur contenant une teneur limitée en Phosphore.

Mise en évidence de l'intérêt de la mise en oeuvre d'un catalyseur contenant une teneur limitée en Phosphore.

Le tableau 2 met en évidence une sélectivité en distillats moyens (70.5 % poids) ainsi qu'un rapport Gazole/Kérosène (1.5) particulièrement élevé pour les catalyseurs C5, C10 et C11 conformes à l'invention par rapport aux catalyseurs C12 et C13 ne contenant eux aussi que du Phosphore et donc eux même conformes à l'invention.

Il apparaît donc que ces catalyseurs C5, C10 et C11, qui ont une teneur en phosphore sélectionnée dans la plage préférentielle de 0.01% à 2.5% poids d'oxyde de l'élément dopant phosphore, présentent des performances catalytiques améliorées et sont particulièrement adaptés pour la production de distillats moyens conformément à l'objectif de l'invention.

Par ailleurs, les résultats catalytiques obtenus pour le catalyseur C9 montrent une conversion moindre lorsque la teneur en phosphore du catalyseur (7% poids $P_2O_5$) n'est pas conforme à l'invention.

Mise en évidence de l'intérêt de la mise en oeuvre d'un catalyseur dont le support présente une teneur en silice sélectionnée.

Le tableau 2 met en évidence que les catalyseurs dont le support présente une teneur en silice sélectionnée dans la fourchette de valeur strictement supérieure à 25% et inférieure à 50% ont des performances catalytiques améliorées en terme de sélectivité et de rapport Gazole/Kérosène et sont donc particulièrement adaptés pour la production de distillats moyens conformément à l'objectif de l'invention.

**Revendications**

1. Catalyseur comprenant au moins un élément hydro-déshydrogénant choisi dans le groupe formé par les éléments du groupe VIB et du groupe VIII de la classification périodique, de 0,6 à 2,5 % poids d'oxyde de phosphore, ledit catalyseur ayant un volume poreux total mesuré par porosimétrie au mercure compris entre 0.35 et 0.74 ml/g et un support non zéolitique à base d'alumine-silice, ladite alumine-silice présentant les caractéristiques suivantes :

   - un pourcentage de silice compris entre 5 et 95 % poids,
   - un contenu en sodium inférieur à 0.03% poids,
   - un volume poreux total mesuré par porosimétrie au mercure compris entre 0.45 et 0.96 ml/g,
   - une porosité telle que :

      i) le volume des mésopores avec un diamètre compris entre 40 et 150 Å et un diamètre moyen poreux compris entre 80 et 140 Å représente 40-70% du volume poreux total mesuré par porosimétrie au mercure ;
      ii) le volume des macropores avec un diamètre supérieur à 500Å représente 30-60% du volume poreux -total mesuré par porosimétrie au mercure;

   - une surface spécifique BET comprise entre 100 et 550 m$^2$/g,
   - un diagramme de diffraction X qui contient au moins les raies principales caractéristiques d'au moins une des alumines de transition comprise dans le groupe composé par les alumines alpha, rhô, khi, êta, gamma, kappa, thêta et delta.

2. Catalyseur selon la revendication 1 dans lequel le catalyseur contient également du bore et/ou du silicium.

3. Catalyseur selon l'une des revendications 1 ou 2 à base de molybdène et de tungstène.

4. Catalyseur selon l'une des revendications 1 ou 2 à base de nickel et de tungstène.

5. Catalyseur selon l'une des revendications précédentes dans lequel le support est constitué d'alumine-silice.

6. Catalyseur selon l'une des revendications 1 à 4 dans lequel le support comprend de 1 à 40% en poids de liant.

7. Catalyseur selon la revendication 6 dans lequel le support résulte du mélange de l'alumine-silice et d'au moins un liant choisi dans le groupe formé par la silice, l'alumine, les argiles, l'oxyde de titane, l'oxyde de bore et la zircone.

8. Catalyseur selon l'une des revendications précédentes comprenant une proportion mineure d'au moins un élément promoteur choisi dans le groupe formé par la zircone et le titane.

9. Procédé d'hydrocraquage/hydroconversion de charges hydrocarbonées utilisant le catalyseur selon l'une des revendications 1 à 8.

10. Procédé d'hydrocraquage/hydroconversion selon la revendication 9 réalisé selon le procédé dit en une étape.

11. Procédé d'hydrocraquage et/ou d'hydroconversion selon la revendication 10 comportant au moins une première zone réactionnelle d'hydroraffinage et au moins une deuxième zone réactionnelle comportant un hydrocraquage d'au moins une partie de l'effluent de la première zone et comportant une séparation incomplète de l'ammoniac de l'effluent sortant de la première zone.

12. Procédé d'hydrocraquage/hydroconversion selon la revendication 9 dans le procédé dit en deux étapes.

13. Procédé selon l'une des revendications 9 à 12 opérant, en présence d'hydrogène, à une température supérieure à 200°C, sous une pression supérieure à 1 MPa, la vitesse spatiale étant comprise entre 0,1 et $20h^{-1}$ et la quantité d'hydrogène introduite est telle que le rapport volumique litre d'hydrogène / litre d'hydrocarbure soit compris entre 80 et 5000 l/l.

14. Procédé selon l'une des revendications 9 à 13 opérant en lit fixe.

15. Procédé selon l'une des revendications 9 à 13 opérant en lit bouillonnant.

16. Procédé selon l'une des revendications 9 à 15 dans lequel les charges hydrocarbonées sont choisies dans le groupe formé par les LCO (light cycle oil (gazoles légers issus d'une unité de craquage catalytique)), les distillats atmosphériques, les distillats sous vide, les charges provenant d'unités d'extraction d'aromatiques des bases d'huile lubrifiante ou issues du déparaffinage au solvant des bases d'huile lubrifiante, les distillats provenant de procédés de désulfuration ou d'hydroconversion en lit fixe ou en lit bouillonnant de RAT (résidus atmosphériques) et/ou de RSV (résidus sous vide) et/ou d'huiles désasphaltées, les huiles désasphaltées, seules ou en mélange.

17. Procédé selon l'une des revendications 9 à 16 dans lequel la charge passe au préalable sur un lit de catalyseur ou d'adsorbant différent du catalyseur d'hydrocraquage/hydroconversion ou d'hydrotraitement.

**Claims**

1. A catalyst comprising at least one hydrodehydrogenating element selected from the group formed by elements from group VIB and group VIII of the periodic table, 0.06% to 2,5 % by weight of phosphorus oxide, said catalyst having a total volume pore, measured by mercury porosimetry, in the range 0.35 to 0.74 ml/g, and a non-zeolitic support based on alumina-silica,
said alumina-silica having the following characteristics:

• a percentage of silica in the range 5% to 95% by weight;
• a sodium content of less than 0.03% by weight;
• a total pore volume, measured by mercury porosimetry, in the range 0.45 to 0.96 ml/g;
• a porosity such that:

i) the volume of mesopores with a diameter in the range 40 Å to 150 Å and with a mean pore diameter in the range 80 Å to 140 Å represents 40-70% of the total pore volume measured by mercury porosimetry;
ii) the volume of macropores with a diameter of more than 500 Å represents 30-60% of the total pore volume measured by mercury porosimetry;

• a BET specific surface area in the range 100 to 550 $m^2$/g;

an X ray diffraction diagram which contains at least the principal characteristic peaks of at least one of the transition aluminas included in the group composed of alpha, rho, khi, eta, gamma, kappa, theta and delta aluminas.

2. A catalyst according to claim 1 in which the catalyst also contain boron and/or silicon.

3. A catalyst according to one of the preceding claims, based on molybdenum and tungsten.

4. A catalyst according to one of the preceding claims, based on nickel and tungsten.

5. A catalyst according to one of the preceding claims wherein the support is constituted of silica- alumina.

6. A catalyst according to claims 1 to 4, in which the support comprises 1% to 40% by weight of binder.

7. A catalyst according to claim 10, in which the support results from mixing alumina-silica and at least one binder selected from the group formed by silica, alumina, clays, titanium oxide, boron oxide and zirconia.

8. A catalyst according to one of the preceding claims, comprising a minor proportion of at least one promoter element selected from the group formed by zirconia and titanium.

9. A process for hydrocracking/hydroconversion of hydrocarbon feeds using a catalyst according to one claims 1 to 8.

10. A hydrocracking/hydroconversion process according to claim 9, carried out using a once-through process.

11. A hydrocracking and/or hydroconversion process according to claim 28, comprising at least one first hydrorefining reaction zone and at least one second reaction zone comprising hydrocracking at least a portion of the effluent from the first zone and comprising incomplete separation of ammonia from the effluent leaving the first zone.

12. A hydrocracking/hydroconversion process according to claim 28, in a two step process.

13. A process according to one of claims 28 to 32, operating in the presence of hydrogen, at a temperature of more than 200°C, at a pressure of more than 1 MPa, the space velocity being in the range 0.1 to 20 $h^{-1}$ and the quantity of hydrogen introduced being such that the litres of hydrogen/litres of hydrocarbon volume ratio is in the range 80 to 5000 l/l.

14. A process according to one of claims 9 to 13, operating in fixed bed mode.

15. A process according to one of claims 9 to 13, operating in ebullated bed mode.

16. A process according to one of claims 9 to 15, in which the hydrocarbon feeds are selected from LCO (light cycle oil - light gas oil from a catalytic cracking unit), atmospheric distillates, vacuum distillates, feeds from units for extracting aromatics from lubricating oil bases or from solvent dewaxing of lubricating oil bases, distillates from desulphurization or fixed bed hydroconversion or atmospheric residue ebullated bed hydroconversion and/or RSV (vacuum residue) and/or deasphalted oils, or deasphalted oil, used alone or as a mixture.

17. A process according to one of claims 9 to 16, in which the feed initially passes over a bed of catalyst or adsorbant different from the hydrocracking/hydroconversion or hydrotreatment catalyst.

**Patentansprüche**

1. Katalysator, umfassend mindestens ein hydrierendes-dehydrierendes Element ausgewählt aus der Gruppe, die aus den Elementen der Gruppe VIB und der Gruppe VIII des Periodensystems gewählt sind, 0,6 bis 2,5 Gew.% an Phosphoroxid, wobei der Katalysator ein Gesamtporenvolumen, gemessen mittels Quecksilberporosimetrie, im Bereich von 0,35 bis 0,74 und einen nicht-zeolithartigen Träger auf Grundlage von Aluminiumoxid-Siliciumdioxid hat, wobei das Aluminiumoxid-Siliciumdioxid die folgenden kennzeichnenden Eigenschaften aufweist:

   - eine Prozentsatz an Siliciumdioxid im Bereich von 5 bis 95 Gew. %,
   - einen Natriumgehalt von weniger als 0,03 Gew.-%,
   - ein Gesamtporenvolumen, gemessen mittels Quecksilberporosimetrie, im Bereich von 0,45 bis 0,96 ml/g,
   - Porositätswerte, die derart beschaffen sind, dass:

   i) das Volumen an Mesoporen mit einem Durchmesser im Bereich von 40 bis 150 Å, und einem mittleren Porendurchmesser im Bereich von 80 bis 140 Å, 40 bis 70 % des Gesamtporenvolumens, gemessen mittels Quecksilberporosimetrie, ausmacht;
   ii) das Volumen an Makroporen, mit einem Durchmesser von mehr als 500 Å, 30 bis 60 % des Gesamtporenvolumens, gemessen mittels Quecksilberporosimetrie, ausmacht;

   - eine spezifische BET-Oberfläche im Bereich von 100 bis 550 m$^2$/g,
   - ein Röntgenbeugungsmuster, das mindestens die kennzeichnenden Hauptlinien mindestens einer der Aluminiumoxid-Übergangsformen enthält, welche der Gruppe angehören, die sich aus den Aluminiumoxiden alpha, rho, chi, eta, gamma, kappa, theta und delta zusammensetzt.

2. Katalysator nach Anspruch 1, wobei der Katalysator weiterhin Bor und/oder Silicium enthält.

3. Katalysator nach einem der Ansprüche 1 oder 2, auf Grundlage von Molybdän und von Wolfram.

4. Katalysator nach einem der Ansprüche 1 oder 2, auf Grundlage von Nickel und von Wolfram.

5. Katalysator nach einem der vorhergehenden Ansprüche, wobei der Träger aus dem Aluminiumoxid-Siliciumdioxid besteht.

6. Katalysator nach einem der Ansprüche 1 bis 4, wobei der Träger 1 bis 40 Gew.-% an Bindemittel umfasst.

7. Katalysator nach Anspruch 6, wobei der Träger durch Vermischen des Aluminiumoxids-Siliciumdioxids mit mindestens einem Bindemittel entsteht, welches aus der Gruppe ausgewählt ist, die von Siliciumdioxid, Aluminiumoxid, Tonen, Titanoxid, Boroxid und Zirkoniumdioxid gebildet wird.

8. Katalysator nach einem der vorhergehenden Ansprüche, umfassend einen geringen Anteil mindestens eines Promotor-Elements, das aus der Gruppe ausgewählt ist, welche von Zirkoniumdioxid und Titan gebildet wird.

9. Verfahren zum Hydrocracken/hydrierenden Umwandeln von kohlenwasserstoffhaltigen Chargen, wobei der Katalysator nach einem der Ansprüche 1 bis 8 verwendet wird.

10. Verfahren zum Hydrocracken/hydrierenden Umwandeln nach Anspruch 9, durchgeführt gemäß sogenannten Ein-Schritt-Verfahren.

11. Verfahren zum Hydrocracken und/oder hydrierenden Umwandeln nach Anspruch 10, aufweisend mindestens einen ersten Reaktionsbereich zur hydrierenden Raffination und mindestens einen zweiten Reaktionsbereich, in welchem ein Hydrocracken mindestens eines Teils des Stoffstroms des ersten Bereichs erfolgt und in welchem eine unvollständige Abtrennung des Ammoniaks aus dem Stoffstrom erfolgt, der den ersten Bereich verlässt.

12. Verfahren zum Hydrocrackenlhydrierenden Umwandeln nach Anspruch 9, durchgeführt gemäß sogenannten Zwei-Schritte-Verfahren.

13. Verfahren nach einem der Ansprüche 9 bis 12, das in Anwesenheit von Wasserstoff, bei einer Temperatur von mehr als 200 °C, unter einem Druck von mehr als 1 MPa betrieben wird, wobei die Raumgeschwindigkeit im Bereich von 0,1 bis 20 h$^{-1}$ liegt und die eingeleitete Menge an Wasserstoff derart ist, dass das Volumenverhältnis an Litern Wasserstoff / Litern Kohlenwasserstoff im Bereich von 80 bis 5000 l/l liegt.

14. Verfahren nach einem der Ansprüche 9 bis 13, das im Festbett betrieben wird.

15. Verfahren nach einem der Ansprüche 9 bis 13, das im Wirbelbett betrieben wird.

16. Verfahren nach einem der Ansprüche 9 bis 15, wobei die kohlenwasserstoffhaltigen Chargen aus der Gruppe ausgewählt sind, die von den LCO (Light Cycle Oil (leichte Gasölfraktion, die aus einer katalytischen Crackanlage stammt)), den atmosphärischen Destillaten, den Vakuumdestillaten, den Chargen, welche aus Anlagen zur Extraktion von aromatischen Verbindungen aus Schmierölgrundstoffen stammen oder welche aus der lösemittelgestützten Paraffinentfernung aus Schmierölgrundstoffen stammen, den Destillaten, welche aus Festbett- oder Wirbelbettverfahren zur Entschwefelung oder hydrierenden Umwandlung von RAT (atmosphärischen Rückständen) und/oder RSV (Vakuumrückständen) und/oder entasphaltierten Ölen stammen, den entasphaltierten Ölen, allein oder in Mischung, gebildet wird.

17. Verfahren nach einem der Ansprüche 9 bis 16, wobei die Charge im Vorfeld über ein Bett aus einem Katalysator oder Adsorptionsmittel geleitet wird, der/das sich vom Katalysator für das/die Hydrocracken/hydrierende Umwandlung oder die Hydrobehandlung unterscheidet.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 02055192 A
- EP 0686687 A
- EP 0325827 A
- EP 0387109 A

**Littérature non-brevet citée dans la description**

- **BRUNAUER-EMMETT-TELLER.** *The Journal of American Society,* 1938, vol. 60, 309
- **Jean Charpin ; Bernard Rasneur.** *Techniques de l'ingénieur, traité analyse et caractérisation,* 1050-5
- **E.P.Barrett ; L.G.Joyner ; P.P.Halenda.** *The Journal of American Society,* 1951, vol. 73, 373
- **A. Lecloux.** Mémoires Société Royale des Sciences de Liège. 1971, 169-209
- **B.C. Lippens ; J.J. Steggerda.** Physical and Chemical aspects of adsorbents and catalysts. Academic Press, 1970, 171-211
- **G.Engelhardt ; D.Michel.** High resolution solid-state NMR of silicates and zeolites. Wiley, 1987
- **Kodakari et al.** *Langmuir,* 1998, vol. 14, 4623-4629
- **J.F. Le Page ; J. Cosyns ; P. Courty ; E. Freund ; J-P. Franck ; Y. Jacquin ; B. Juguin ; C. Marcilly ; G. Martino ; J. Miquel.** Applied Heterogenous Catalysis. *Technip,* 1987
- **J.Scherzer.** Hydrocracking, Science and Technology. M.Dekker Incorporated, 1996